# EUROPEAN PATENT SPECIFICATION

(11) **EP 4 216 179 B1**
(45) Date of publication and mention of the grant of the patent: **25.06.2025**
(21) Application number: 21885785.2
(22) Date of filing: 27.09.2021
(51) Int. Cl.: G07C 5/00, G07C 5/08, G08G 1/00, H04N 7/18

(54) **VEHICLE RECORDING CONTROL DEVICE AND VEHICLE RECORDING CONTROL METHOD**
FAHRZEUGAUFZEICHNUNGSSTEUERUNGSVORRICHTUNG UND FAHRZEUGAUFZEICHNUNGSSTEUERUNGSVERFAHREN
DISPOSITIF DE COMMANDE D'ENREGISTREMENT DE VÉHICULE ET PROCÉDÉ DE COMMANDE D'ENREGISTREMENT DE VÉHICULE

(30) Priority: 30.10.2020 JP 2020182840; 30.10.2020 JP 2020182925
(43) Date of publication of application: 26.07.2023
(73) Proprietor: JVCKENWOOD Corporation, Yokohama-shi, Kanagawa 221-0022 (JP)
(72) Inventor: TABATA, Kiyofumi, Yokohama-shi, Kanagawa 221-0022 (JP)
(74) Representative: Klang, Alexander H.
(86) International application number: PCT/JP2021/035354
(87) International publication number: WO 2022/091666

(56) References cited:
- WO-A1-2020/136941
- JP-A- 2009 166 737
- JP-A- 2015 088 794
- JP-A- 2019 079 250
- JP-A- 2019 080 158
- US-A1- 2019 054 880
- US-A1- 2020 369 220

## Description

### Field

The present invention relates to an on-vehicle recording control device and an on-vehicle recording control method.

### Background

A dashboard camera that is installed in a vehicle, that captures images of surroundings of the vehicle, that detects an event with respect to the vehicle by detecting an impact shock, and that records video images captured at a time of the occurrence of the event has been widely used (see, for example, JP 2019-28760 A).

WO 2020 136941 A discloses a vehicle recording control device including a video-data acquisition unit that acquires video data captured by a plurality of photographing units that photograph the surroundings of a vehicle; an event detection unit that detects events concerning the vehicle; a parking detection unit that detects that the vehicle is in a parked state; an object detection unit that detects nearby objects having distances less than a prescribed distance from the vehicle while the vehicle is parked; and a recording-function control unit that performs recording triggered by an event detected by the event detection unit when the object detection unit has detected a nearby object having a distance less than the prescribed distance from the vehicle while the vehicle is parked, by using video data captured by the camera(s) other than the camera that takes photographs in the direction in which the nearby object has been detected, among the plurality of cameras.

US 2019 054880 A discloses a method for collecting and storing vehicle sensor data of at least one sensing system of a vehicle in order to detect an incident, accident and/or scam. The method includes the steps of: (1) continuously collecting and storing a first set of vehicle sensor data for a preceding first pre-definable time period at least when the vehicle is in motion and/or when a door or trunk of the vehicle is open, (2) collecting and storing a second set of vehicle sensor data for a coming second pre-definable time period when at least one of the following occurs: the vehicle is brought to standstill, the door or trunk of the vehicle is being closed, or the vehicle drives away from standstill after being parked.

### Summary

### Technical Problem

There may be a contact accident between vehicles while the vehicles are being parked or when the vehicles are parked in a parking lot or the like. However, in some cases, there may also be a case in which it is difficult to identify another vehicle that has come into contact with an own vehicle by using the video images that are stored when an event by the contact accident between vehicles while is detected while the vehicles are being parked.

In view of the above mentioned issues, an object of present embodiments is to appropriately record a video for identifying another vehicle related to an event that has occurred while the vehicles are being parked.

In accordance with the present invention, an on-vehicle recording control device, an on-vehicle recording control method as set forth in the appended claims is provided. In particular, according to one aspect of the present invention, there is provided an on-vehicle recording control device comprising: a video data acquisition unit configured to acquire video data captured by imagers that capture images of surroundings of a vehicle; a parking detection unit configured to detect that the vehicle has been parked; an another vehicle detection unit configured to detect another vehicle from the video data acquired by the video data acquisition unit; an event detection unit configured to detect an event with respect to the vehicle; and a recording controller configured to temporarily store, when the another vehicle detection unit detects another vehicle, after the parking detection unit has detected that the vehicle has been parked, the video data in which the another vehicle has been detected by the another vehicle detection unit, and to store, in an associated manner, when the event detection unit detects the event while the vehicle is parked, the video data due to the detected event and the video data in which the another vehicle has been detected.

According to one aspect of the present invention, there is provided an on-vehicle recording control method performed by an on-vehicle recording control device comprising: a video data acquiring step of acquiring video data captured by imagers that capture images of surroundings of a vehicle; a parking detecting step of detecting that the vehicle has been parked; another vehicle detecting step of detecting another vehicle from the video data acquired at the video data acquisition step; an event detecting step of detecting an event with respect to the vehicle; and a recording controlling step of temporarily storing, after it is detected at the parking detecting step that the vehicle has been parked, the video data in which the another vehicle has been detected at the another vehicle detecting step, and storing, in an associated manner, when the event is detected at the event detecting step while the vehicle is parked, the video data due to the detected event and the video data in which the another vehicle has been detected.

The on-vehicle recording control device and the on-vehicle recording control method according to the embodiments of the present invention are able to appropriately record a video for identifying another vehicle related to an event that has occurred while the vehicles are being parked.

### Brief Description of Drawings

FIG. 1 is a block diagram illustrating an example of a configuration of an on-vehicle recording device according to a first embodiment;
FIG. 2 is a diagram illustrating arrangement locations of imagers that are mounted on a vehicle;
FIG. 3 is a conceptual diagram illustrating a loop recording of video data;
FIG. 4 is a flowchart illustrating a flow of processes in an on-vehicle recording control device according to the first embodiment;
FIG. 5 is a diagram illustrating a state in which one vehicle has been parked;
FIG. 6 is a diagram illustrating a state for a predetermined period of time prior to a time at which a parking of one vehicle has been completed;
FIG. 7 is a diagram illustrating video data obtained when another vehicle has been detected;
FIG. 8 is a diagram illustrating a state in which another vehicle comes into contact with one vehicle;
FIG. 9 is a diagram illustrating video data obtained when an event has been detected while one vehicle is being parked;
FIG. 10 is a flowchart illustrating a flow of processes in an on-vehicle recording control device according to a second embodiment;
FIG. 11 is a flowchart illustrating a flow of processes in an on-vehicle recording control device according to a third embodiment;
FIG. 12 is a flowchart illustrating a flow of processes in an on-vehicle recording control device according to a fourth embodiment;
FIG. 13 is a block diagram illustrating an example of a configuration of an on-vehicle recording device according to a fifth embodiment;
FIG. 14 is a flowchart illustrating a flow of processes in an on-vehicle recording control device according to the fifth embodiment;
FIG. 15 is a diagram illustrating a state in which one vehicle has been parked;
FIG. 16 is a diagram illustrating a state in which a moving object is present near one vehicle that is being parked;
FIG. 17 is a diagram illustrating a state in which another vehicle is stopped at a location near one vehicle that is being parked;
FIG. 18 is a diagram illustrating video data obtained when another vehicle has been detected;
FIG. 19 is a diagram illustrating a state in which another vehicle comes into contact with one vehicle;
FIG. 20 is a diagram illustrating video data obtained when an event has been detected while one vehicle is being parked;
FIG. 21 is a flowchart illustrating a flow of processes in an on-vehicle recording control device according to a sixth embodiment; and
FIG. 22 is a flowchart illustrating a flow of processes in an on-vehicle recording control device according to a seventh embodiment.

### Description of Embodiments

Preferred embodiments of an on-vehicle recording control device and an on-vehicle recording control method according to the present invention will be described in detail below with reference to accompanying drawings. Furthermore, the present invention is not limited to the embodiments described below. In addition, the components described in the embodiments below include one that can be replaced and easily conceived by those skilled in the art or one that is substantially identical.

### First Embodiment

### On-vehicle recording device

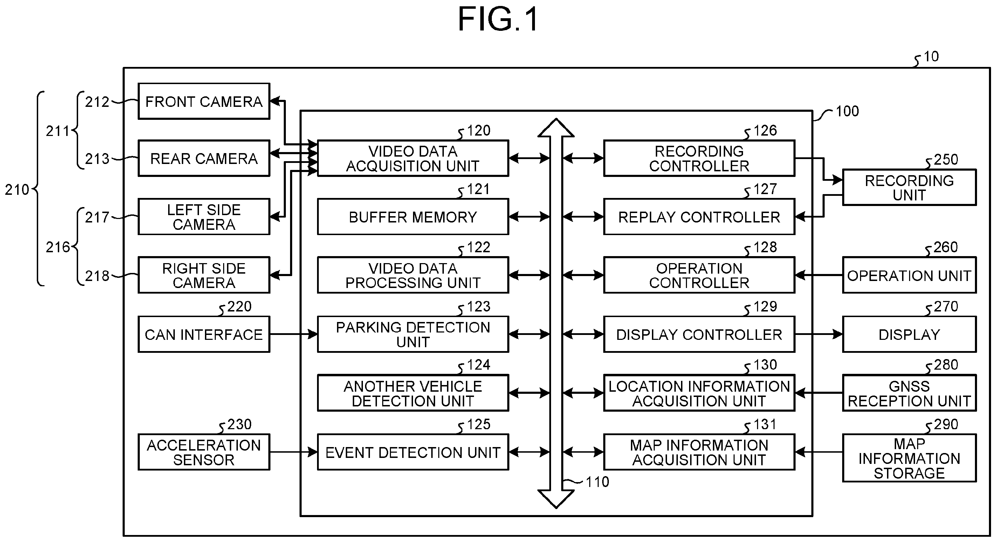

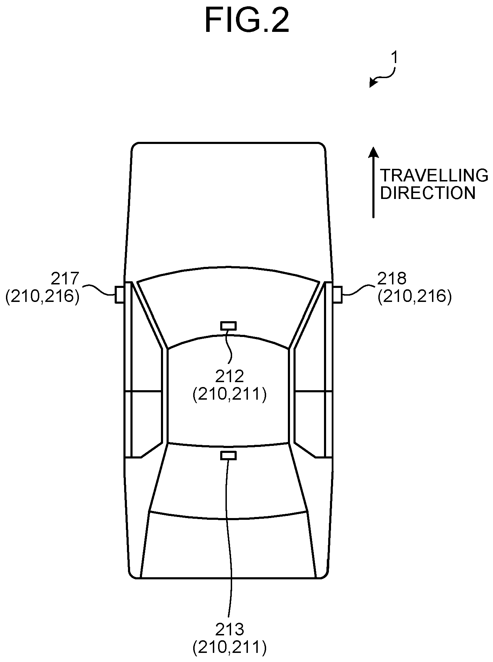

FIG. 1 is a block diagram illustrating an example of a configuration of an on-vehicle recording device 10 according to a first embodiment. FIG. 2 is a diagram illustrating an arrangement location of an imager 210 that is mounted on a vehicle 1. The on-vehicle recording device 10 is what is called a dashboard camera, and is driven by an electric power supplied from the vehicle 1. The on-vehicle recording device 10 may also be a device that is a portable type and that can be used in a vehicle, in addition to the device that is mounted on the vehicle.

The on-vehicle recording device 10 includes the imager 210, a CAN interface 220, an acceleration sensor 230, a recording unit 250, an operation unit 260, a display 270, a global navigation satellite system (GNSS) reception unit 280, a map information storage 290, and an on-vehicle recording control device (hereinafter, referred to as a "control device") 100.

The imager 210 functions as a camera that is able to capture images of surroundings of the vehicle 1 on which the on-vehicle recording device 10 is mounted and that is able to output the captured image as an electrical signal. In the first embodiment, the imager 210 includes a first imager 211 that captures images of a front view and a rear view of the vehicle 1, and a second imager 216 that is provided on left and right sides of the vehicle 1. The first imager 211 includes a front camera 212 that captures images of the front view of the vehicle 1, and a rear camera 213 that captures images of the rear view of the vehicle 1, whereas the second imager 216 includes a left side camera 217 that captures images of a left side view of the vehicle 1, and a right side camera 218 that captures images of a right side view of the vehicle 1.

The front camera 212 included in the first imager 211 is arranged near a front window in a room of the vehicle 1 so as to face forward with respect to the vehicle 1, and captures images of the surroundings of the vehicle 1 mainly focusing on a forward direction of the vehicle 1. The rear camera 213 included in the first imager 211 is arranged on a rear side of the room of the vehicle 1 so as to face rearward with respect to the vehicle 1, and captures images of the surroundings mainly focusing on a rearward direction of the vehicle 1. The front camera 212 and the rear camera 213 are cameras that are used as dashboard cameras.

The left side camera 217 included in the second imager 216 is arranged on a left side surface of the vehicle 1 so as to face rearward with respect to the vehicle 1 on a left side, and captures images of a rear view on the left side of the vehicle 1. The right side camera 218 included in the second imager 216 is arranged on a right side surface of the vehicle 1 so as to rearward with respect to the vehicle 1 on a right side, and captures images of a rear view on the right side of the vehicle 1. Both of the left side camera 217 and the right side camera 218 may be cameras that are used for side monitors (electronic side mirrors), or may be cameras that are used to display a bird's-eye view video. The imager 210 constituted in this way outputs video data on the captured images to a video data acquisition unit 120 included in the control device 100.

The CAN interface 220 is an interface for acquiring various kinds of vehicle information via a controller area network (CAN). The vehicle information includes information on, for example, a running state of the vehicle, such as an operating state of an engine, vehicle speed information, and parking brake information.

The acceleration sensor 230 is a sensor that is able to detect an event with respect to the vehicle 1 on which the on-vehicle recording device 10 is mounted, and outputs a detection result to an event detection unit 125 included in the control device 100. The acceleration sensor 230 is a sensor that detects acceleration in, for example, 3-axis directions. The 3-axis directions are a front-back direction, a left-right direction, and a vertical direction of the vehicle 1. The acceleration sensor 230 is able to detect an impact shock to the vehicle 1 by the acceleration in the 3-axis directions.

The recording unit 250 is used to temporarily store or retain data in the on-vehicle recording device 10. The recording unit 250 is, for example, a semiconductor memory device, such as a random access memory (RAM) or a flash memory, or a recording medium, such as a memory card. Alternatively, the recording unit 250 may be an external recording unit that is wirelessly connected via a communication device (not illustrated). The recording unit 250 records therein the video data acquired by the video data acquisition unit 120 based on a control signal output from a recording controller 126 that is included in the control device 100.

The operation unit 260 is an interface that is able to receive various operations performed with respect to the on-vehicle recording device 10. The operation unit 260 receives an operation for performing a replay instruction of, for example, the video data, or an operation for performing a deletion instruction therefor. In addition, the operation unit 260 is able to receive an operation for manually recording an event. The operation unit 260 outputs the input operation information to an operation controller 128 included in the control device 100.

The display 270 is, as an example, a display device inherent in the on-vehicle recording device 10, a display device shared with another system including a navigation system, or the like. The display 270 is a display including, for example, a liquid crystal display (LCD) or an organic electro-luminescence (EL) display, or the like. In the first embodiment, the display 270 is arranged in a dashboard, an instrument panel, a center console, or the like located in front of a driver of the vehicle 1. The display 270 displays a video based on the video signal output from a display controller 129 included in the control device 100. The display 270 displays a video that is being captured by the imager 210 or a video that has been recorded in the recording unit 250.

The GNSS reception unit 280 receives radio waves emitted from multiple positioning satellite included in the GNSS. The GNSS reception unit 280 outputs a signal of the received radio waves to a location information acquisition unit 130 included in the control device 100.

The map information storage 290 stores therein map information. The map information includes information on, for example, a parking lot. The map information storage 290 outputs the stored map information to a map information acquisition unit 131 that is included in the control device 100. The map information storage 290 may be a storage device, such as an external server, that acquires the map information via a communication function (not illustrated).

The control device 100 is an arithmetic processing device (a control device) that is constituted of, for example, a central processing unit (CPU) or the like. The control device 100 loads a stored program into a memory and executes a command included in the program. Consequently, the control device 100 executes an on-vehicle recording control method according to the present invention. In addition, the control device 100 is a computer that executes a program according to the present invention. The control device 100 includes an internal memory (not illustrated), and the internal memory is used to temporarily stores therein data on the control device 100. The control device 100 includes the video data acquisition unit 120, a buffer memory 121, a video data processing unit 122, a parking detection unit 123, another vehicle detection unit 124, the event detection unit 125, the recording controller 126, a replay controller 127, the operation controller 128, the display controller 129, the location information acquisition unit 130, and the map information acquisition unit 131, all of which are connected to a bus 110.

The video data acquisition unit 120 acquires the video data obtained by capturing images of the surroundings of the vehicle 1. More specifically, the video data acquisition unit 120 acquires the video data output from the imager 210 that captures images of the surroundings of the vehicle 1. Furthermore, the on-vehicle recording device 10 includes the multiple imagers included in the imager 210, so that the video data acquisition unit 120 is able to acquire pieces of video data captured by the multiple imagers included in the imager 210. That is, the video data acquisition unit 120 is able to acquire each of the pieces of video data captured by the first imager 211 and the video data captured by the second imager 216.

The buffer memory 121 is a memory that is an internal memory included in the control device 100 and that temporarily stores therein the video data. The buffer memory 121 is a memory that temporarily records the video data while updating, for example, the video data obtained by the video data acquisition unit 120 in a certain period of time.

The video data processing unit 122 converts the video data (hereinafter, referred to as "temporary captured video data") that is temporarily stored in the buffer memory 121 into an arbitrary file format, such as the MP4 format, which is encoded by an arbitrary method, such as H.264 or Moving Picture Experts Group (MPEG)-4. The video data processing unit 122 generates, from the temporary video data, video data in which moving image data for a certain period of time is defined as a single file. In detail, the video data processing unit 122 generates, from the temporary video data, video data for a predetermined period of time as a single file in a recoding order, and generates multiple files constituted of the pieces of the video data for the predetermined period of time in accordance with a period of time in which the images are captured by the imager 210. The predetermined period of time used in this case is a period of time (for example, for 60 seconds) that has been set by an input operation performed onto the operation unit 260. The video data processing unit 122 outputs the video data that has been generated in this way to the recording controller 126. Furthermore, the video data processing unit 122 outputs the generated video data to the display controller 129. In addition, the period of time of the video data that is generated as a single file is set to 60 seconds as one example. However, the example is not limited thereto. Furthermore, the video data mentioned here may be data including a sound in addition to the video captured by the imager 210.

The parking detection unit 123 detects, based on the vehicle information acquired by the CAN interface 220, that the vehicle 1 has been parked or is in a parking state. The state in which the vehicle 1 has been parked or in the parking state indicates that a shift position has been shifted to a "parking" position or a parking brake has been operated, indicates that a speed of the vehicle 1 becomes zero for, for example, 5 seconds or more, indicates that an engine has been stopped, or the like. Alternatively, the parking detection unit 123 may detect that the vehicle 1 is in the parking state based on an arbitrary trigger, such as an operation performed by a user. In addition, the parking detection unit 123 may detect that the vehicle 1 has been parked or is in the parking state in a case where the location at which the vehicle 1 has been stopped indicates a parking lot by referring to the map information that has been acquired by the map information acquisition unit 131.

The another vehicle detection unit 124 detects another vehicle from the video data acquired by the video data acquisition unit 120. That is, the another vehicle detection unit 124 detects, based on the video data acquired by the video data acquisition unit 120, another vehicle that is a vehicle present around the vehicle 1.

The event detection unit 125 detects an event with respect to the vehicle 1. An arbitrary method may be used for a method of detecting the event with respect to the vehicle 1 performed by the event detection unit 125, and, as an example, the event detection unit 125 detects the event based on a detection result obtained by the acceleration sensor 230. In this case, when an acceleration equal to or larger than a predetermined threshold is applied to the vehicle 1, the event detection unit 125 determines that the event has occurred in the vehicle 1 based on the acceleration applied to the vehicle 1 and detected by the acceleration sensor 230. That is, when the acceleration sensor 230 has detected the acceleration equal to or larger than the predetermined threshold, the event detection unit 125 detects this state as an event. The threshold of the acceleration detected as the event by the event detection unit 125 is a value capable of detecting the acceleration occurring by a contact accident between another object and the vehicle 1 that is being stopped, and is set to, for example, 0.2 G, or the like.

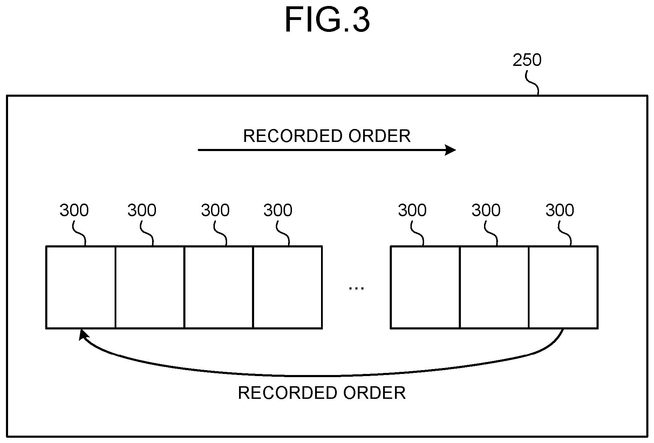

FIG. 3 is a conceptual diagram illustrating a loop recording of the video data. In FIG. 3, the recording controller 126 performs control to cause the recording unit 250 to record video data 300 that has been converted to a file format by the video data processing unit 122. If an operation for the loop recording is set, the recording controller 126 performs the loop recording process, and records the video data 300 that has been converted to a file format by the video data processing unit 122 as the video data 300 that can be overwritten in the recording unit 250. More specifically, the recording controller 126 continuously records the video data 300 generated by the video data processing unit 122 into the recording unit 250 while the loop recording process is being performed, and, if a capacity of the recording unit 250 becomes full, the recording controller 126 records new video data 300 by overwriting the oldest video data 300 with the new video data 300.

The replay controller 127 replays the video data that has been selected by an input operation performed onto the operation unit 260. The replay controller 127 performs control such that the video data recorded in the recording unit 250 is to be replayed based on a control signal, that has been output from the operation controller 128, of each of a selection operation and a replay operation associated with the operation received by the operation unit 260.

The operation controller 128 acquires the operation information on the operation received by the operation unit 260, and performs the operation control based on the operation information. The operation controller 128 acquires replay information on, for example, the video data, and causes the replay controller 127 to replay the video data. Furthermore, the operation controller 128 acquires erase operation information that indicates an erase operation for erasing the video data, and causes the recording controller 126 to erase the video data.

The display controller 129 performs control of displaying the video data on the display 270. That is, the display controller 129 outputs a video signal to be displayed on the display 270 by replaying the video that is being captured by the imager 210 or the video data that has been recorded in the recording unit 250. Accordingly, the display controller 129 causes the display 270 to display the video data.

The location information acquisition unit 130 calculates current location information on the vehicle 1 by using a known method based on radio waves received by the GNSS reception unit 280.

The map information acquisition unit 131 acquires the map information by using the map information storage 290 in accordance with the current location information on the vehicle 1 acquired by the location information acquisition unit 130. Accordingly, the map information acquisition unit 131 checks the current location information on the vehicle 1 against the map information, and identifies the current location of the vehicle 1 on the acquired map information.

### Process performed in on-vehicle recording device

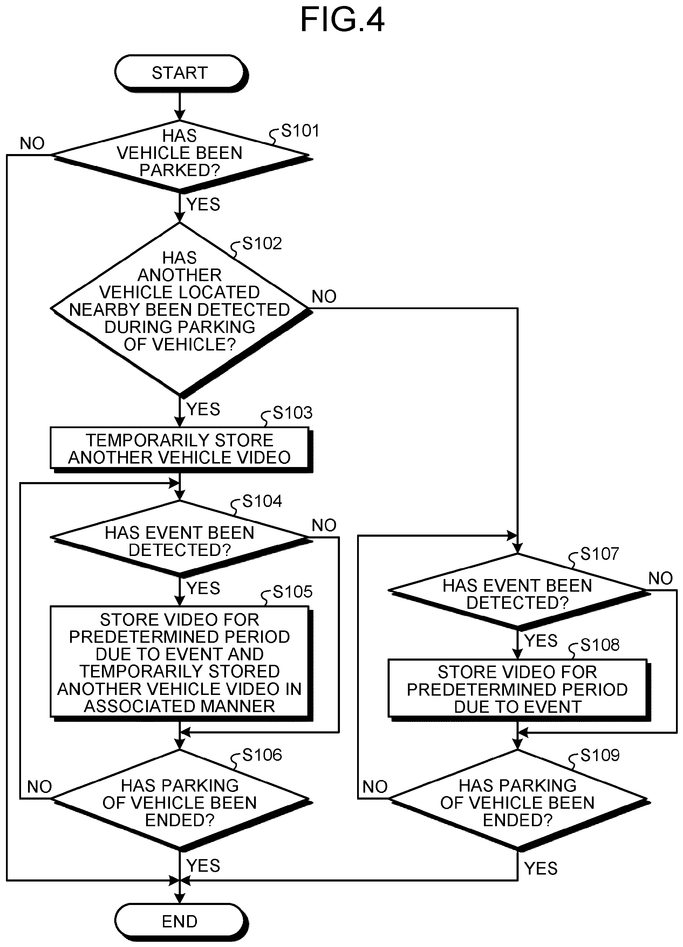

In the following, a flow of processes in the control device 100 will be described with reference to FIG. 4. FIG. 4 is a flowchart illustrating a flow of processes in the on-vehicle recording control device 100 according to the first embodiment.

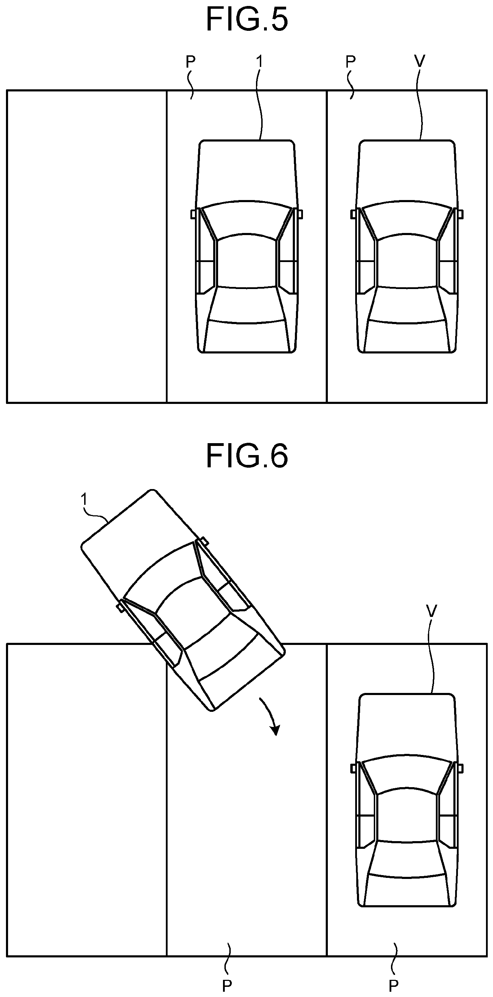

The timing at which the on-vehicle recording device 10 is started to be operated is a timing at which, for example, a power of an engine or the like of the vehicle 1 is turned on and an electric power is supplied to the on-vehicle recording device 10. When the vehicle 1 is not parked, the on-vehicle recording device 10 performs a function as a known dashboard camera. In a period of time in which the on-vehicle recording device 10 is being operated, the processes illustrated in FIG. 4 are periodically performed. If the processes illustrated in FIG. 4 are started, the control device 100 determines whether or not the vehicle 1 has been parked (Step S101). That is, the control device 100 determines, by using the parking detection unit 123, whether or not the vehicle 1 on which the on-vehicle recording device 10 is mounted has been parked. FIG. 5 is a diagram illustrating a state in which the vehicle 1 has been parked. For example, as illustrated in FIG. 5, when the vehicle 1 performs a parking operation to enter an arbitrary parking section P and reaches completion of the parking operation, a parking brake is operated such that the vehicle speed becomes 0 km/h to enter a braking state, and a shift position is operated to a "parking" position. The parking detection unit 123 acquires the vehicle information from the CAN interface 220, and determines whether or not the vehicle 1 has been parked based on the vehicle information acquired from the CAN interface 220 indicates a state in which the vehicle 1 has been parked or not.

In addition, the parking detection unit 123 may determine whether or not the vehicle 1 has been parked based on information other than the vehicle information that has been acquired by the CAN interface 220. The parking detection unit 123 acquires the current location information on the vehicle 1 by using the location information acquisition unit 130 based on, for example, the radio waves received by the GNSS reception unit 280, and, if it is able to be determined that the current location of the vehicle 1 is the parking lot based on the map information that is acquired by the map information acquisition unit 131, the parking detection unit 123 may determine that the vehicle 1 has been parked at a time at which the vehicle 1 has stopped at that location. That is, the control device 100 detects that the vehicle 1 has been parked in the parking lot.

Furthermore, if it is detected that the vehicle 1 has been parked, the on-vehicle recording device 10 starts monitoring of parking. That is, if an event with respect to the vehicle 1 has been detected while functioning an event detection process by the event detection unit 125 while the vehicle 1 is parked, the video data due to the event is stored.

If it is determined, by the parking detection unit 123, that the vehicle 1 has not been parked (determined No at Step S101), the control device 100 ends the processes illustrated in FIG. 4, and again starts the process at Step S101 when the processes illustrated in FIG. 4 are started again.

If it is determined, by the parking detection unit 123, that the vehicle 1 has been parked by the parking detection unit 123 (determined Yes at Step S101), it is determined whether or not another vehicle located nearby has been detected during the parking of the vehicle 1 (Step S102). The detection of the another vehicle located nearby is performed by the another vehicle detection unit 124 based on the video data that has been acquired by the video data acquisition unit 120. That is, the another vehicle detection unit 124 detects another vehicle (see FIG. 6) that is present near the own vehicle 1 based on the video data acquired by the video data acquisition unit 120. When the another vehicle is detected by the another vehicle detection unit 124, the another vehicle is detected based on the video data obtained for a predetermined period of time prior to a time at which the vehicle 1 has been parked. The predetermined period of time in this case is a assumed period of time required for the vehicle 1 to perform a parking operation and is set to, for example, 60 seconds or the like.

FIG. 6 is a diagram illustrating a state of the vehicle 1 for a predetermined period of time prior to a time at which the vehicle 1 has been parked, that is, at which the parking of the vehicle 1 has been completed. The predetermined period of time that is used for detecting of another vehicle V performed by the another vehicle detection unit 124 corresponds to a period of time in which the vehicle 1 performs a parking operation. Thus the vehicle 1 is performing, for example, as illustrated in FIG. 6, a parking operation with respect to an arbitrary parking section P for the predetermined period of time prior to the time at which the parking of the vehicle 1 has been completed. Even in the parking operation performed by the vehicle 1, the imager 210 continues to capture images of the surroundings of the vehicle 1, and the video data acquisition unit 120 continues to acquire the video data captured by the imager 210. Accordingly, in the parking operation performed by the vehicle 1, if the another vehicle V is present around the vehicle 1, the another vehicle V is also captured by the imager 210, and the video data acquisition unit 120 acquires the video data in which the another vehicle V is included.

For example, as illustrated in FIG. 6, when the vehicle 1 is being parked in the parking section P by performing a backward operation in a state in which the another vehicle V has already been parked in the parking section P that is adjacent to the parking section P for the vehicle 1, the another vehicle V is easily captured by the rear camera 213 that is arranged at the rear end of the vehicle 1 facing rearward. That is, the another vehicle V is readily included in the video data captured by the rear camera 213, and, accordingly, the video data acquisition unit 120 acquires the video data in which the another vehicle V is included.

Furthermore, as illustrated in FIG. 6, when the vehicle 1 is being parked in the parking section P by performing a backward operation in a state in which the another vehicle V has already been parked in a parking section located on the right side of the parking section P for the vehicle 1, the another vehicle V is readily included in the video data captured by the right side camera 218 provided in the vehicle 1. Consequently, the video data acquisition unit 120 acquires the video data in which the another vehicle V is included.

The another vehicle detection unit 124 performs detection of the another vehicle from the video data that is obtained for the predetermined period of time prior to the time at which the parking of the vehicle 1 has been completed from among the pieces of the video data acquired by the video data acquisition unit 120. The detection of the another vehicle performed by the another vehicle detection unit 124 is performed by using, for example, a vehicle recognition dictionary. The vehicle recognition dictionary is stored in advance in an internal memory included in the control device 100 as a dictionary in which it is possible to check that the object included in the video data is a vehicle. The another vehicle detection unit 124 performs detection of the another vehicle from the video data by checking the vehicle recognition dictionary against the video data for the predetermined period of time prior the time at which the parking of the vehicle 1 has been completed.

Furthermore, the another vehicle detection unit 124 does not need to detect all of vehicles included in the video data, but may only detect another vehicle or other vehicles present near the vehicle 1. It is preferable that the another vehicle detection unit 124 recognizes another vehicle that occupies a predetermined area ratio or more, such as an area ratio equal to or larger than, for example, 20% in the video captured by the imager 210, in particular, another vehicle located at a parking position adjacent to the parking position of the vehicle 1.

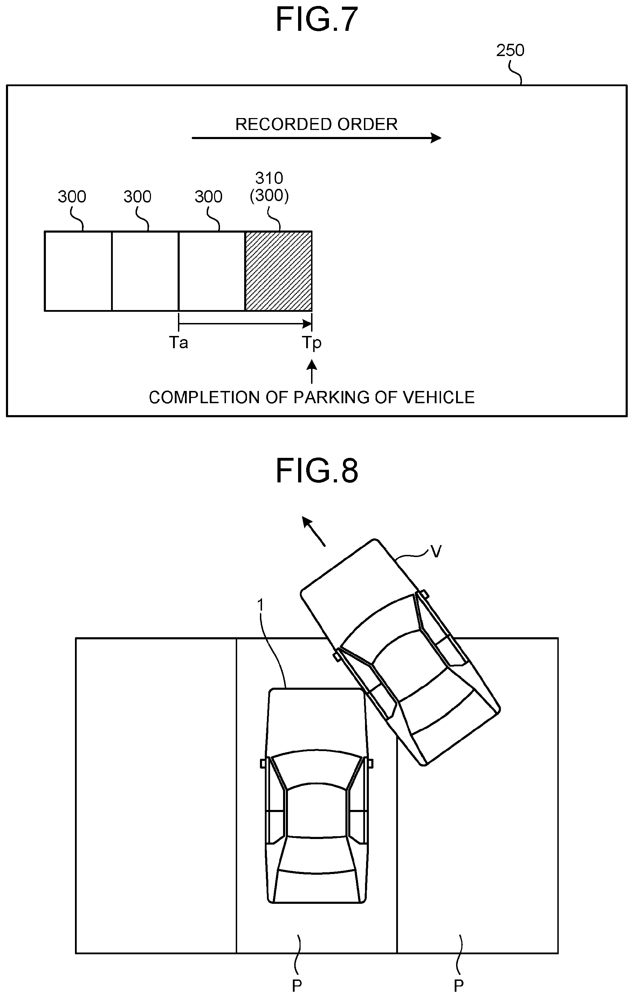

If another vehicle present near the vehicle 1 during the parking of the vehicle 1 has been detected by the another vehicle detection unit 124 (determined at Yes Step S102), a video of the another vehicle is temporarily stored (Step S103). FIG. 7 is a diagram illustrating the video data 300 at the time at which the another vehicle has been detected. When the another vehicle is detected by the another vehicle detection unit 124 in the video data 300 between a time Tp at which the parking of the vehicle 1 has been completed and a time Ta prior to the time Tp for a predetermined period of time, the recording controller 126 performs setting such that the video data 300 in which the another vehicle has been detected is treated as another vehicle video data 310, and temporarily stores the video data. That is, when the parking detection unit 123 detects that the vehicle 1 has been parked and if the another vehicle has been detected by the another vehicle detection unit 124 from the video data 300 between the time Tp at which the parking of the vehicle 1 has been completed and the time Ta prior to the time Tp for the predetermined period of time, the recording controller 126 temporarily stores, in the recording unit 250, the video data 300 in which the another vehicle has been detected as the another vehicle video data 310. A process for temporarily storing the video data 300 to be performed here includes a process for adding a flag indicating that the another vehicle has been detected to the video data 300 when the another vehicle has been detected, a process for storing the video data 300 in association with the event video data, and a process for prohibiting overwriting until the temporarily stored data is released.

Then, the control device 100 determines whether or not an event with respect to the vehicle 1 has been detected by the event detection unit 125 (Step S104). In detail, the event detection unit 125 detects an occurrence of an event based on information indicating whether or not an acceleration detected by the acceleration sensor 230 is equal to or larger than a threshold that is set in advance. That is, when the acceleration detected by the acceleration sensor 230 is less than the threshold, the event detection unit 125 does not detect an event with respect to the vehicle 1. In contrast, when the acceleration detected by the acceleration sensor 230 is equal to or larger than the threshold, the event detection unit 125 detects that a large impact shock has occurred to the vehicle 1 and an event has occurred to the vehicle 1.

FIG. 8 is a diagram illustrating a state in which the another vehicle V comes into contact with the vehicle 1. The vehicle 1 that is being parked does not move by itself, so that, the event with respect to the vehicle 1 that is parked may include, for example, as illustrated in FIG. 8, a case in which the another vehicle V comes into contact with the vehicle 1 when the another vehicle V exits the parking lot.

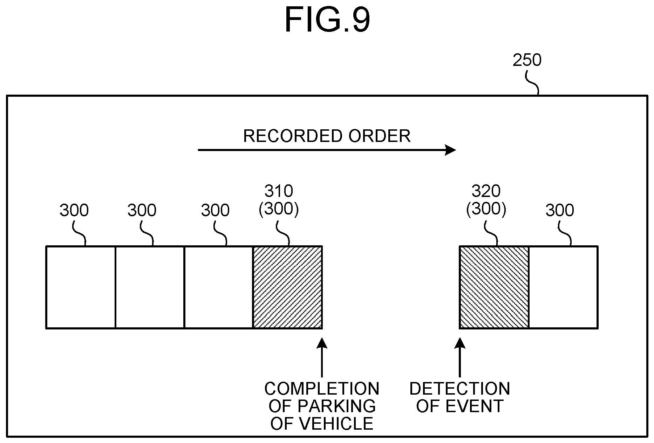

When the event detection unit 125 detects that an event has occurred to the vehicle 1 (determined Yes at Step S104), the recording controller 126 stores, in an associated manner, the video for the predetermined period of time due to the event and the temporarily stored video of the another vehicle (Step S105). FIG. 9 is a diagram illustrating the video data 300 obtained at the time at which an event has been detected while the vehicle 1 is parked. When the event detection unit 125 detects the occurrence of the event, the on-vehicle recording device 10 according to the first embodiment starts to capture images by the imager 210, and acquires the video data 300 by the video data acquisition unit 120. As a result, the recording unit 250 is able to record the video data 300 immediately after the detection of the event that has occurred while the vehicle 1 is parked. In addition, the recording controller 126 stores, as event video data 320, the video data 300 for the predetermined period of time after the occurrence of the event from among the pieces of the video data 300 immediately after the event has been detected in this way.

The predetermined period of time used in this case is an assumed period of time required to verify a cause of the event that has occurred in the vehicle 1, and is set to, for example, 60 seconds, or the like from the detection of the event. Furthermore, when the loop recording is able to be performed on the video data captured by the imager 210 while the vehicle 1 is parked, for example, 60 seconds before and after the detection of the event is set as the predetermined period of time of the video data due to the event.

In addition, when the event detection unit 125 detects the event while the vehicle 1 is parked, the recording controller 126 stores, in an associated manner, the event video data 320 that is the video data due to the detected event and the another vehicle video data 310. Specifically, the recording controller 126 associates the event video data 320 with the another vehicle video data 310 such that the another vehicle video data 310 is also able to be easily replayed when the event video data 320 is replayed.

For example, the recording controller 126 associates both of the pieces of video data such that the another vehicle video data 310 is continuously replayed when the event video data 320 is replayed, or such that the event video data 320 is simultaneously replayed as a split display or picture-in-picture when the another vehicle video data 310 is replayed.

A process for storing the event video data 320 and the another vehicle video data 310 in an associated manner is performed by storing both of the pieces of the video data in an overwrite-prohibited manner such that, for example, both of the event video data 320 and the another vehicle video data 310 are simultaneously or continuously replayed. Alternatively, both of the pieces of the video data are stored as combined video data in an overwrite-prohibited manner such that both of the event video data 320 and the another vehicle video data 310 are continuously replayed.

FIG. 9 is a diagram conceptually illustrating a state in which a process of recording the video data 300 based on the loop recording is stopped when the vehicle 1 has been parked, and also conceptually illustrating both of the another vehicle video data 310 that is temporarily stored by detecting another vehicle and the event video data 320 that is stored due to the event detection. The recording controller 126 stores the event video data 320 and the another vehicle video data 310 in an associated manner.

After the completion of the process at Step S105, the parking detection unit 123 determines whether or not the parking has been ended (Step S106). That is, the control device 100 determines, by the parking detection unit 123, whether or not the parking of the vehicle 1 on which the on-vehicle recording device 10 is mounted has been ended. The parking detection unit 123 determines that the parking of the vehicle 1 has been ended based on a state in which a power of the engine or the like of the vehicle 1 is turned off and an electric power is not supplied to the on-vehicle recording device 10. Furthermore, the parking detection unit 123 may determine whether or not the parking of the vehicle 1 has been ended by acquiring the vehicle information from the CAN interface 220 and determining whether or not a shift position is operated to a position other than "parking", a braking state made by a parking brake is released, or a vehicle speed becomes larger than 0 km/h.

If it is determined, as a result of the determination performed by the parking detection unit 123, that the parking of the vehicle 1 has been ended (determined Yes at Step S106), the control device 100 ends the processes illustrated in FIG. 4. In this case, the another vehicle data that has been temporarily stored at Step S103 is able to be deleted or overwritten by releasing the temporary stored state.

Moreover, if it is determined, as a result of the determination performed by the parking detection unit 123, the parking of the vehicle 1 has not been ended (determined No at Step S106), the process returns to Step S104, and it is determined whether or not an event with respect to the vehicle 1 that is parked has been detected by the parking detection unit 123 (Step S104).

Moreover, if the event detection unit 125 does not detect an occurrence of an event with respect to the vehicle 1 at the determination process performed at Step S104 (determined No at Step S104), the process proceeds to Step S106, and it is determined whether or not the parking of the vehicle 1 has been ended (Step S106).

Moreover, if another vehicle located near the vehicle 1 during the parking of the vehicle 1 has not been detected by the another vehicle detection unit 124 at the determination process performed at Step S102 (determined No at Step S102), it is determined whether or not an event for the vehicle 1 has been detected by the event detection unit 125, (Step S107). That is, an occurrence of an event is detected by the event detection unit 125 based on the detection result of the acceleration by the acceleration sensor 230 indicating whether or not the acceleration is equal to or larger than the threshold that is set in advance.

If the event detection unit 125 detects that an event has occurred to the vehicle 1 (determined Yes at Step S107), the recording controller 126 stores the video that is obtained for the predetermined period of time due to the event (Step S108).

At Step S108, after the event video data has been stored, the parking detection unit 123 determines whether or not the parking has been ended (Step S109). That is, the control device 100 determines whether or not the parking of the vehicle 1 on which the on-vehicle recording device 10 is mounted has been ended, by performing the process in a similar manner to that performed at Step S106.

If it is determined, as a result of the determination performed by the parking detection unit 123, that the parking of the vehicle 1 has been ended (determined Yes at Step S109), the control device 100 ends the processes illustrated in FIG. 4. Furthermore, if it is determined, as a result of the determination performed by the parking detection unit 123, that the parking of the vehicle 1 is not ended (determined No at Step S109), the process returns to Step S107, and it is determined whether or not an event with respect to the vehicle 1 that is parked has been detected by the event detection unit 125 (Step S107).

Moreover, at the determination at Step S107, if the event detection unit 125 does not detect an occurrence of an event with respect to the vehicle 1 (determined No at Step S107), the process proceeds to Step S109, and it is determined whether or not the parking has been ended (Step S109).

### Effects

As described above, in the first embodiment, when the parking detection unit 123 detects that the vehicle 1 has been parked and when the another vehicle has been detected by the another vehicle detection unit 124 from the video data obtained for the predetermined period of time prior to the time at which the parking has been completed, for example, between the time Tp at which the parking of the vehicle 1 has been completed and the time Ta prior to the time Tp for the predetermined period of time, the another vehicle video data in which the another vehicle has been detected is temporarily stored. Furthermore, after the another vehicle video data has been temporarily stored, if the event detection unit 125 detects an event while the vehicle 1 is parked, both of the event video data that is the video data due to the detected event and the another vehicle video data are stored in an associated manner. As a result, even if an event occurs at the time at which the vehicle 1 is parked, it is possible to appropriately record the video in which the another vehicle corresponding to a cause of the event is able to be identified by referring to the event video data and the another vehicle video data. For example, if an event occurs due to an contact accident between the another vehicle and the vehicle 1 that is parked, and even if the another vehicle continues running without stopping to thereby cause a hit-and-run accident, it is possible to appropriately identify the another vehicle that causes the hit-and-run accident by referring to the another vehicle video data captured at the time at which the vehicle 1 is parked.

### Second Embodiment

A configuration of the on-vehicle recording device 10 according to a second embodiment is the same as that of the on-vehicle recording device 10 according to the first embodiment. However, the on-vehicle recording device 10 according to the second embodiment is different from the on-vehicle recording device 10 according to the first embodiment in that another vehicle is detected in consideration of a vehicle entering direction into the parking section P during the parking of the vehicle. Other components and processes are the same as those described in the first embodiment. Therefore, descriptions thereof will be omitted and the same reference numerals are assigned.

In the on-vehicle recording device 10 according to the second embodiment, the parking detection unit 123 included in the control device 100 detects, in addition to detecting that the vehicle 1 has been parked, an vehicle entering direction during the parking of the vehicle 1 based on the vehicle information acquired from the CAN interface 220. That is, when the parking detection unit 123 detects that the vehicle 1 has been parked, the parking detection unit 123 is able to detect a vehicle entering direction of the vehicle 1 during the parking of the vehicle 1, considering whether the vehicle 1 enters the parking space while moving forward or moving backward.

Moreover, the another vehicle detection unit 124 included in the control device 100 detects another vehicle from the video data captured by the imager 210 that captures the vehicle entering direction detected by the parking detection unit 123 during the parking of the vehicle 1. That is, in the first embodiment, the another vehicle detection unit 124 detects another vehicle from the video data captured by all of the imagers included in the imager 210, whereas, in the second embodiment, the another vehicle detection unit 124 detects the another vehicle from the video data captured by one of the imagers included in imager 210 that captures the vehicle entering direction of the vehicle 1.

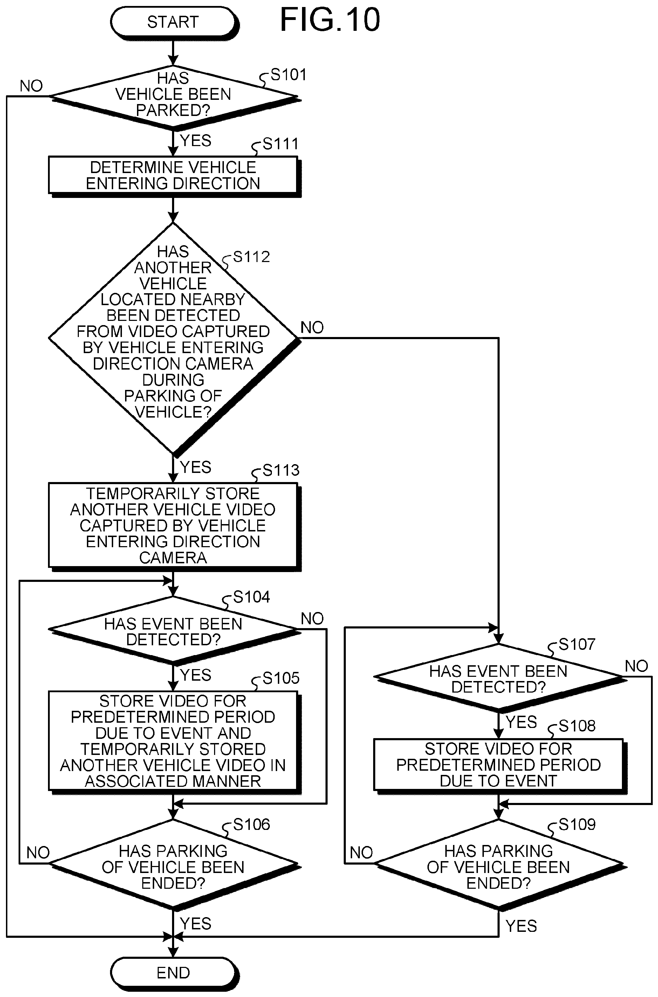

FIG. 10 is a flowchart illustrating a flow of processes performed in the on-vehicle recording control device 100 according to the second embodiment. If it is determined, by the parking detection unit 123, that the vehicle 1 has been parked (determined Yes at Step S101), the parking detection unit 123 determines the vehicle entering direction during the parking of the vehicle 1 (Step S111). The parking detection unit 123 determines, based on the vehicle information acquired from the CAN interface 220, a travelling direction of the vehicle 1 while the vehicle 1 is parked. That is, the parking detection unit 123 determines whether the vehicle 1 has been parked while moving forward or backward, and detects the vehicle entering direction during the parking of the vehicle.

Then, the control device 100 determines whether or not another vehicle located nearby has been detected from the video data captured by the imager that is included in the imagers 210 and that is able to capture the vehicle entering direction during the parking of the vehicle 1 (Step S112). That is, the another vehicle detection unit 124 performs detection of the another vehicle based on the video data captured by the imager included in the imager 210 and that captures the vehicle entering direction determined by the parking detection unit 123 during the parking of the vehicle 1. In this case, as the vehicle entering direction during the parking of the vehicle 1 is a forward movement direction or a backward movement direction, the another vehicle detection unit 124 performs detection of the another vehicle based on the video data captured by the front camera 212 or the rear camera 213 included in the first imager 211.

For example, as illustrated in FIG. 6, when the vehicle 1 is parked in the parking section P while moving backward, the parking detection unit 123 determines that the vehicle 1 has been parked while moving backward. In this case, the another vehicle detection unit 124 performs detection of the another vehicle based on the video data captured by the rear camera 213 included in the imager 210 that captures a rear view corresponding to the vehicle entering direction during the parking of the vehicle 1 has been parked. That is, if it is determined, by the parking detection unit 123, that the vehicle 1 has been parked while moving backward, the another vehicle detection unit 124 defines that the rear camera 213 that captures the rear view of the vehicle 1 as a vehicle entering direction camera, and performs detection of the another vehicle based on the video data captured by the rear camera 213 that is defined as the vehicle entering direction camera. In detail, if the rear camera 213 is defined as the vehicle entering direction camera, the another vehicle detection unit 124 performs detection of the another vehicle from the video data captured by the rear camera 213 for the predetermined period of time prior to the time at which the vehicle 1 has been parked.

In addition, if it is determined, by the parking detection unit 123, that the vehicle 1 has been parked while moving forward, the another vehicle detection unit 124 defines that the front camera 212 that captures a forward view of the vehicle 1 is a vehicle entering direction camera, and performs detection of another vehicle based on the video data captured by the front camera 212 that is defined as the vehicle entering direction camera. In addition, the imager that is included in the imager 210 and defined as the vehicle entering direction camera is reset when the vehicle 1 exits the parked place, and is again defined in accordance with the vehicle entering direction in the subsequent parking operation.

If another vehicle that is present near the vehicle 1 during the parking of the vehicle 1 is detected by the another vehicle detection unit 124 from the video data captured by the vehicle entering direction camera (determined Yes at Step S112), the another vehicle video captured by the vehicle entering direction camera is temporarily stored (Step S113). The recording controller 126 temporarily stores, as the another vehicle video data, the video data in which the another vehicle has been detected by the another vehicle detection unit 124 from the video data captured by the imager included in the imager 210 and that captures the vehicle entering direction of the vehicle 1 detected by the parking detection unit 123. For example, when the rear camera 213 is defined as the vehicle entering direction camera and if the another vehicle has been detected by the another vehicle detection unit 124 from the video data captured by the rear camera 213, the recording controller 126 performs setting such that the video data that is obtained by the rear camera 213 and in which the another vehicle has been detected is treated as the another vehicle video data, and temporarily stores the data.

Then, the control device 100 determines whether or not an event with respect to the vehicle 1 has been detected by the event detection unit 125 (Step S104). As a result of this determination, if an occurrence of an event with respect to the vehicle 1 has been detected by the event detection unit 125 (determined Yes at Step S104), the recording controller 126 stores, in an associated manner, the video for a predetermined period of time due to the event and the another vehicle video that is temporarily stored at Step S113 (Step S105).

### Effects

As described above, in the second embodiment, the parking detection unit 123 detects the vehicle entering direction during the parking of the vehicle 1 has been parked, and the another vehicle detection unit 124 detects the another vehicle that is present near the vehicle 1 from the video data captured by the imager that is included in the imager 210 and that captures the vehicle entering direction of the vehicle 1. The recording controller 126 temporarily stores, as the another vehicle video data, the video data in which the another vehicle has been detected in this way, and, furthermore, associates the another vehicle video data with the event video data, and then, stores the associated data. Accordingly, it is possible to reduce arithmetic processing by the control device 100 for detecting the another vehicle from the video data captured by the imager 210 without decreasing a detection accuracy for detecting the another vehicle present near the vehicle 1 during the parking of the vehicle 1. Accordingly, it is possible to store the event video data and the another vehicle video data in an associated manner while suppressing electric power consumed during the parking of the vehicle 1 is parked more reliably. As a result, it is possible to more appropriately record video in which the another vehicle related to the event that has occurred while the vehicle 1 is parked is able to be identified.

### Third Embodiment

A configuration of the on-vehicle recording device 10 according to a third embodiment is the same as that of the on-vehicle recording device 10 according to the first embodiment. However, the on-vehicle recording device 10 according to the third embodiment is different from the on-vehicle recording device 10 according to the first embodiment in that another vehicle is detected from the video data captured by the second imager 216 provided on each of the left and right sides of the vehicle 1. Other components and processes are the same as those described in the first embodiment. Therefore, descriptions thereof will be omitted and the same reference numerals are assigned.

In the on-vehicle recording device 10 according to the third embodiment, detection of another vehicle that is present near the vehicle 1 during the parking of the vehicle 1 is performed based on the video data captured by the second imager 216 provided on each of the left and right sides of the vehicle 1. That is, in the first embodiment, the another vehicle detection unit 124 detects another vehicle from the video data captured by all of the imagers included in the imager 210, whereas, in the third embodiment, the another vehicle detection unit 124 detects another vehicle from the video data captured by the second imager 216 included in the imager 210.

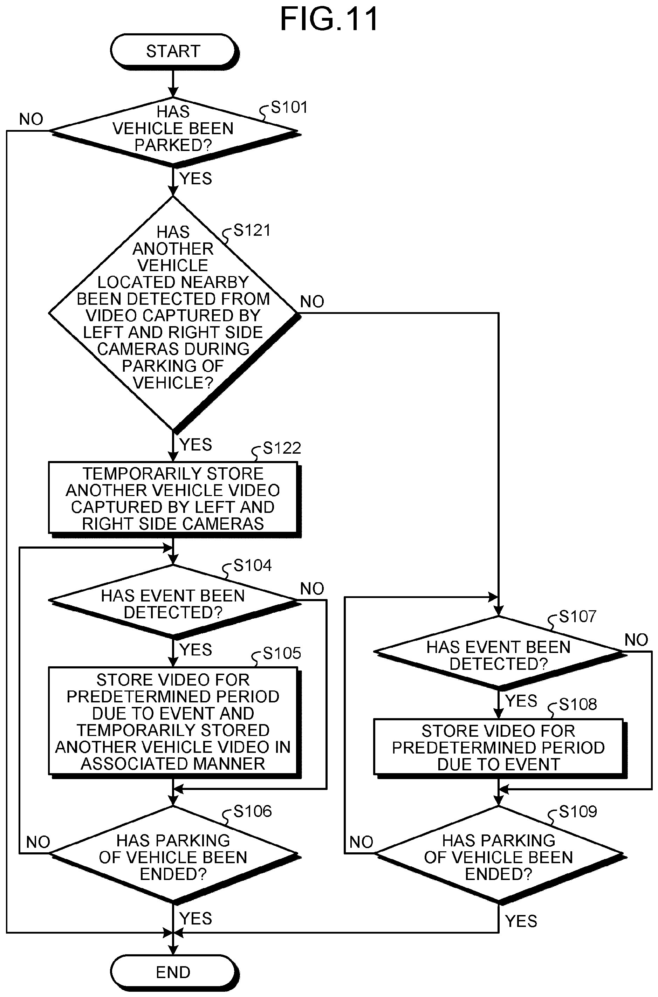

FIG. 11 is a flowchart illustrating a flow of processes in the on-vehicle recording control device 100 according to the third embodiment. If it is determined, by the parking detection unit 123, that the vehicle 1 has been parked (determined Yes at Step S101), it is determined whether or not another vehicle located nearby has been detected from the video obtained from the left and right side cameras during the parking of the vehicle 1 (Step S121).

That is, the another vehicle detection unit 124 that performs detection of another vehicle based on the video data acquired by the video data acquisition unit 120 detects another vehicle from the video data captured by the second imager 216 and acquired by the video data acquisition unit 120. In detail, as the second imager 216 includes the left side camera 217 that captures the left side of the vehicle 1 and the right side camera 218 that captures the right side of the vehicle 1, the another vehicle detection unit 124 performs detection of the another vehicle based on the video data captured by the left side camera 217 and the video data captured by the right side camera 218. Accordingly, for example, as illustrated in FIG. 5, it is possible to appropriately detect the another vehicle that is parked next to the own vehicle 1 when the vehicle 1 is parked in a parking lot in which vehicles are parked in parallel.

If the another vehicle present near the vehicle 1 during the parking of the vehicle 1 has been detected by the another vehicle detection unit 124 from the video data captured by the second imager 216 including the left and right side cameras that capture the left and right sides of the vehicle 1 respectively (determined Yes at Step S121), the pieces of another vehicle video captured by the left and right side cameras are stored (Step S122). A process for temporarily storing the another vehicle video is performed by the recording controller 126 included in the control device 100. The recording controller 126 temporarily stores, as the another vehicle video data, the video data in which the another vehicle has been detected by the another vehicle detection unit 124 from the video data captured by the left side camera 217 included in the second imager 216 and the video data captured by the right side camera 218 included in the second imager 216.

For example, when another vehicle has been detected by the another vehicle detection unit 124 from the video data captured by the left side camera 217, the recording controller 126 temporarily stores the video data by the left side camera 217 in which the another vehicle has been detected acquired by the left side camera 217 as the another vehicle video data. Similarly, when another vehicle is detected by the another vehicle detection unit 124 from the video data captured by the right side camera 218, the recording controller 126 temporarily stores the video data by the right side camera 218 in which the another vehicle has been detected as the another vehicle video data. Furthermore, when another vehicle is detected by the another vehicle detection unit 124 from each of the video data captured by the left side camera 217 and the video data captured by the right side camera 218, the recording controller 126 temporarily stores both of the pieces of video data in each of which the another vehicle has been detected as the another vehicle video data.

Then, the control device 100 determines, by the event detection unit 125, whether or not an event with respect to the vehicle 1 has been detected (Step S104). As a result of this determination, if the event detection unit 125 detects that an event has occurred with respect to the vehicle 1 (determined Yes at Step S104), the recording controller 126 stores, in an associated manner, the video for a predetermined period of time due to the event and the another vehicle video that is temporarily stored at Step S122 (Step S105).

Moreover, at the determination at Step S121, when another vehicle located near the vehicle 1 during the parking of the vehicle 1 has not been detected by the another vehicle detection unit 124 from the video data captured by the left and right side cameras (determined No at Step S121), it is determined whether or not an event with respect to the vehicle 1 has been detected by the event detection unit 125 (Step S107).

### Effects

As described above, in the third embodiment, the another vehicle detection unit 124 detects the another vehicle present near the vehicle 1 from the video data captured by the imagers included in the second imager 216 and provided on the left and right sides of the vehicle 1. That is, in a parking lot in which vehicles are parked in parallel, it is possible to efficiently detect the another vehicle present near the own vehicle 1 from the video data captured by the second imager 216 that captures the left and right sides of the vehicle 1. Accordingly, it is possible to reduce arithmetic processing performed by the control device 100 for detecting the another vehicle from the video data captured by the imager 210 without decreasing the detection accuracy for detecting the another vehicle present near the vehicle 1 during the parking of the vehicle 1. Accordingly, it is possible to store the event video data and the another vehicle video data in an associated manner while suppressing electric power consumed during the parking of the vehicle 1 more reliably. As a result, it is possible to more appropriately record the video in which another vehicle related to the event that has occurred while the vehicle 1 is parked is able to be identified.

### Fourth Embodiment

A configuration of the on-vehicle recording device 10 according to a fourth embodiment is the same as that of the on-vehicle recording device 10 according to the first embodiment. However, the on-vehicle recording device 10 according to the fourth embodiment is different from the on-vehicle recording device 10 according to the first embodiment in that a license plate of the another vehicle is detected. Other components and processes are the same as those described in the first embodiment. Therefore, descriptions thereof will be omitted and the same reference numerals are assigned.

In the on-vehicle recording device 10 according to the fourth embodiment, when another vehicle present near the vehicle 1 during the parking of the vehicle 1 is detected, a license plate provided on the another vehicle is detected. That is, in the fourth embodiment, the another vehicle detection unit 124 detects another vehicle and a license plate of the another vehicle from the video data acquired by the video data acquisition unit 120.

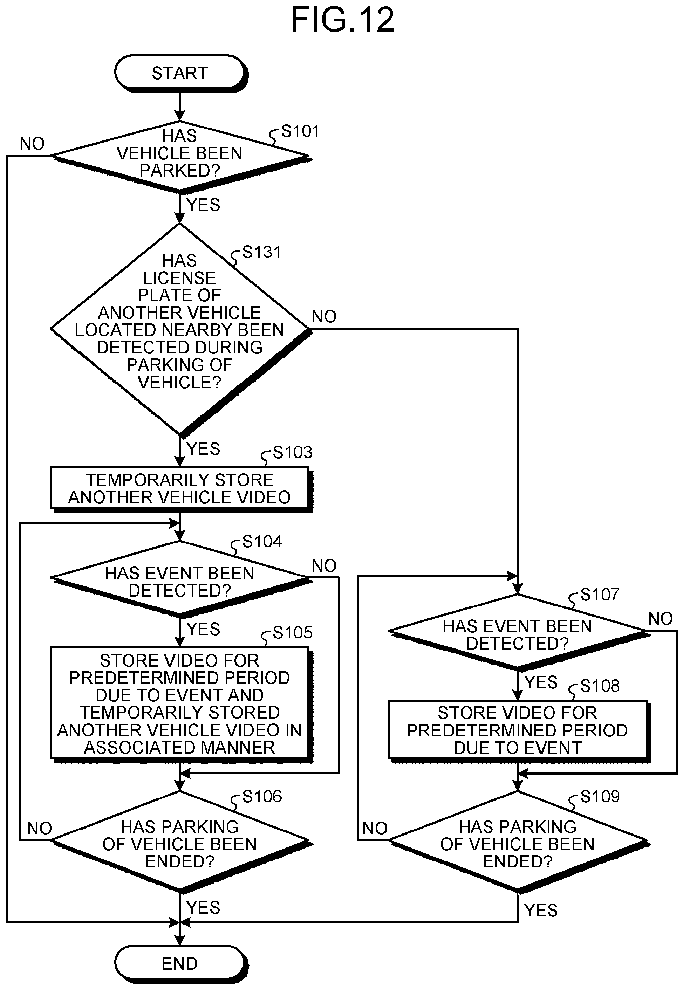

FIG. 12 is a flowchart illustrating a flow of processes in the on-vehicle recording control device 100 according to the fourth embodiment. If it is determined, by the parking detection unit 123, that the vehicle 1 has been parked (determined Yes at Step S101), it is determined whether or not a license plate of the another vehicle located nearby has been detected during the parking of the vehicle 1 (Step S131).

That is, the another vehicle detection unit 124 that performs detection of the another vehicle based on the video data acquired by the video data acquisition unit 120 detects the another vehicle from the video data acquired by the video data acquisition unit 120, and, furthermore, performs detection of a license plate attached to the detected another vehicle. That is, the another vehicle detection unit 124 further detects whether or not a license plate is included in the video data in which the another vehicle has been detected.

If a license plate of the another vehicle present near the vehicle 1 during the parking of the vehicle 1 has been detected by the another vehicle detection unit 124 (determined Yes at Step S131), the another vehicle video in which the license plate has been detected is temporarily stored (Step S103). That is, the recording controller 126 temporarily stores, as the another vehicle video data, the video data in which the license plate of the another vehicle has been detected together with the another vehicle included in the video data acquired by the video data acquisition unit 120.

Then, the control device 100 determines whether or not an event with respect to the vehicle 1 has been detected by the event detection unit 125 (Step S104). As a result of this determination, if the event detection unit 125 detects that an event has occurred with respect to the vehicle 1 (determined Yes at Step S104), the recording controller 126 stores, in an associated manner, the video for a predetermined period of time due to the event and the another vehicle video which is temporarily stored at Step S103 and in which the license plate of the another vehicle has been detected (Step S105).

Moreover, at the determination performed at Step S131, if the license plate of the another vehicle located near the vehicle 1 during the parking of the vehicle 1 has not been detected by the another vehicle detection unit 124 (determined No at Step S131), it is determined whether or not an event with respect to the vehicle 1 has been detected by the event detection unit 125 (Step S107). That is, even if the another vehicle is detected by the another vehicle detection unit 124 based on the video data acquired by the video data acquisition unit 120, when it is not possible to detect a license plate of the another vehicle (determined No at Step S131), the process proceeds to Step S107, and performs determination whether or not an event with respect to the vehicle 1 has been detected.

### Effects

As described above, in the fourth embodiment, the another vehicle detection unit 124 performs detection of not only the another vehicle but also the license plate of the another vehicle from the video data acquired by the video data acquisition unit 120, and temporarily stores, as the another vehicle video data, the video data in which the license plate has been detected. Accordingly, it is possible to identify the another vehicle present near the vehicle 1 during the parking of the vehicle 1 more reliably based on information indicated on the license plate. Accordingly, even if an event has occurred in the vehicle 1 while the vehicle 1 is parked, it is possible to identify the cause of the event more reliably by referring to both of the event video data and the another vehicle video data in which the license plate has been detected. That is, it is possible to identify the another vehicle that comes into contact the vehicle 1 while the vehicle 1 is parked more reliably based on the information indicated by the license plate imaged in the another vehicle video data. As a result, it is possible to more appropriately record the video in which the another vehicle related to the event that has occurred while the vehicle 1 is parked is able to be identified.

### Fifth Embodiment

A configuration of the on-vehicle recording device 10 according to a fifth embodiment is the same as that of the on-vehicle recording device 10 according to the first embodiment. However, the on-vehicle recording device 10 according to the fifth embodiment is different from the on-vehicle recording device 10 according to the first embodiment in that the on-vehicle recording device 10 according to the fifth embodiment detects a moving object that is moving near the vehicle 1 while the vehicle 1 is parked, and detects that the detected moving object is the another vehicle V. Other components and processes are the same as those described in the first embodiment. Therefore, descriptions thereof will be omitted and the same reference numerals are assigned.

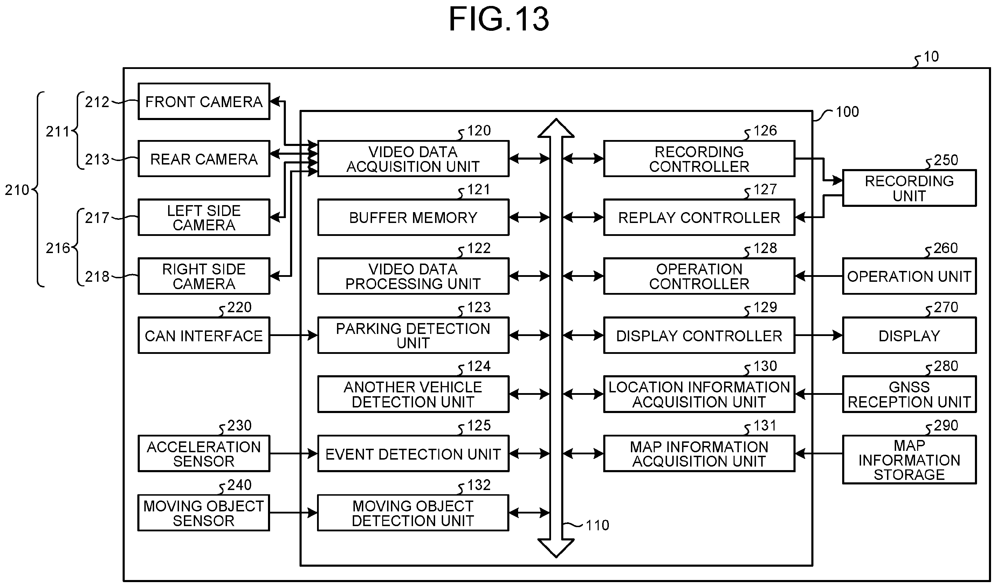

FIG. 13 is a block diagram illustrating an example of a configuration of the on-vehicle recording device 10 according to the fifth embodiment. Similarly to the on-vehicle recording device 10 according to the first embodiment, the on-vehicle recording device 10 according to the fifth embodiment includes the imager 210, the CAN interface 220, the acceleration sensor 230, the recording unit 250, the operation unit 260, the display 270, the GNSS reception unit 280, the map information storage 290, and the control device 100. The on-vehicle recording device 10 according to the fifth embodiment further includes a moving object sensor 240.

The moving object sensor 240 is a sensor that is used to detect a moving object that is moving near the vehicle 1, and outputs a detection result to a moving object detection unit 132 included in the control device 100. The moving object sensor 240 is arranged at multiple positions of, for example, a bumper located on the front side of the vehicle 1 and a bumper located on the rear side of the vehicle 1, and an obstacle sensor that detects an obstacle around the vehicle 1 by using ultrasound waves is used as the moving object sensor 240. The moving object sensor 240 is able to detect a moving object that is moving near the vehicle 1 by detecting that the obstacle detected by the moving object sensor 240 is moving relative to the vehicle 1 that is parked.

Furthermore, the moving object sensor 240 may be one that detects the moving object moving near the vehicle 1 by using another method other than the ultrasound waves. The moving object sensor 240 may be configured so as to be able to detect the moving object moving near the vehicle 1 by using, for example, electromagnetic waves, such as infrared rays. Furthermore, the moving object sensor 240 may use the imager 210 and detect the moving object based on the video data captured by the imager 210.

Similarly to the on-vehicle recording device 10 according to the first embodiment, the control device 100 includes the video data acquisition unit 120, the buffer memory 121, the video data processing unit 122, the parking detection unit 123, the another vehicle detection unit 124, the event detection unit 125, the recording controller 126, the replay controller 127, the operation controller 128, the display controller 129, the location information acquisition unit 130, and the map information acquisition unit 131, all of which are connected to the bus 110. In the on-vehicle recording device 10 according to the fifth embodiment, the control device 100 further includes the moving object detection unit 132.

The moving object detection unit 132 detects a moving object that is moving near the vehicle 1 while the vehicle 1 is parked. When the parking detection unit 123 detects that the vehicle 1 is parked, the moving object detection unit 132 performs detection of a moving object that is moving near the vehicle 1 while the vehicle 1 is parked based on information output from the moving object sensor 240.

### Process performed in on-vehicle recording device

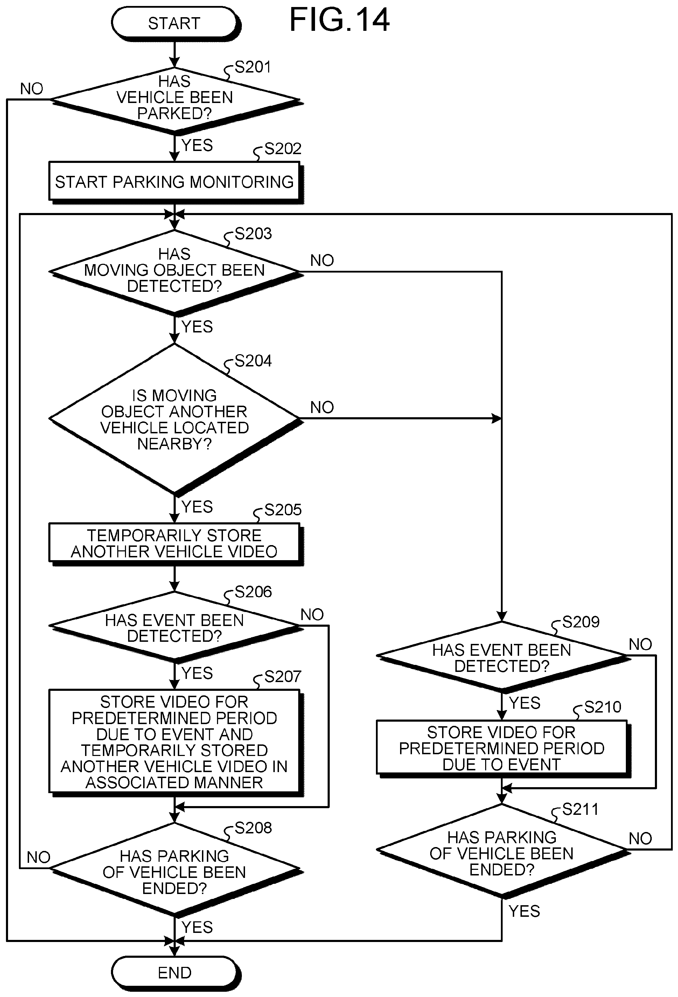

In the following, a flow of processes in the control device 100 will be described with reference to FIG. 14. FIG. 14 is a flowchart illustrating processes in the on-vehicle recording control device 100 according to the fifth embodiment.

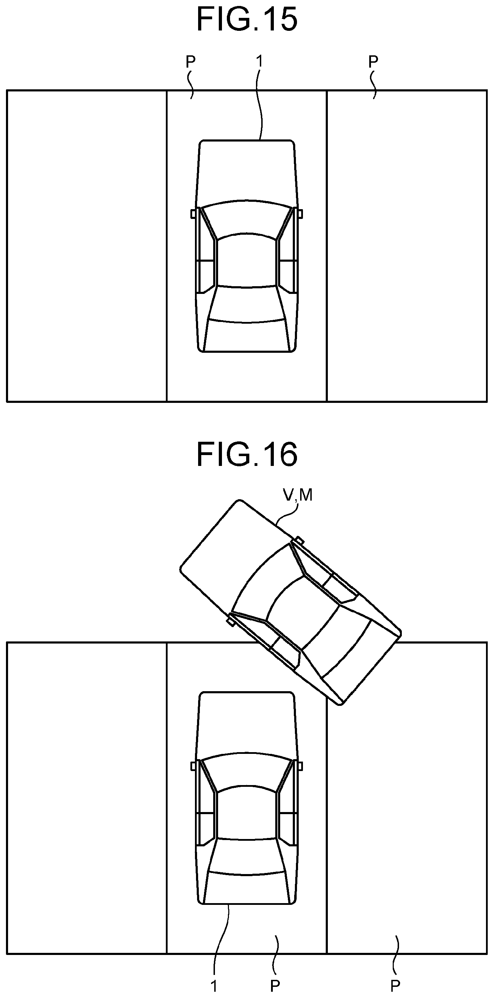

The process illustrated in FIG. 14 is periodically performed while the on-vehicle recording device 10 is operated. If the process illustrated in FIG. 14 has been started, the control device 100 performs determination whether or not the vehicle 1 has been parked (Step S201). That is, the control device 100 determines, by the parking detection unit 123, whether or not the vehicle 1 on which the on-vehicle recording device 10 is mounted has been parked, that is, determines, by the parking detection unit 123, that the vehicle 1 is parked. FIG. 15 is a diagram illustrating a state in which the vehicle 1 has been parked. If, for example, as illustrated in FIG. 15, the vehicle 1 is parked in the arbitrary parking section P and completes a parking operation, a vehicle speed becomes 0 km/h, a parking brake is operated so as to enter a braking state, and then, a shift position is operated so as to be shifted to a "parking" position. The parking detection unit 123 acquires the vehicle information using the CAN interface 220, and performs determination whether or not the vehicle 1 has been parked based on whether or not the vehicle information acquired from the CAN interface 220 indicates a state in which the vehicle 1 has been parked in this way described above.

As a result of determination by the parking detection unit 123, if it is determined that the vehicle 1 has not been parked (determined No at Step S201), the control device 100 ends the process illustrated in FIG. 14, and starts the process from Step S201 when the process illustrated in FIG. 14 is again started.

As a result of determination by the parking detection unit 123, if it is determined, by the parking detection unit 123, that the vehicle 1 has been parked (determined Yes at Step S201), a parking monitoring is started (Step S202). The parking monitoring mentioned here is a method for detecting an occurrence of an event by the acceleration sensor 230 and detecting a moving object that is moving around the vehicle 1 by the moving object sensor 240 when the vehicle 1 is parked.

Then, the control device 100 determines whether or not a moving object has been detected by the moving object detection unit 132 (Step S203). FIG. 16 is a diagram illustrating a state in which a moving object M is present near the vehicle 1 that is parked. For example, as illustrated in FIG. 16, when the another vehicle V is going to be parked in a section P located next to the parking section P in which the vehicle 1 is parked, the another vehicle V moves near the own vehicle 1. The moving object sensor 240 included in the on-vehicle recording device 10 continuously detects presence or absence of an object that is present near the vehicle 1, and continuously detects, if the object is present near the vehicle 1, a distance to the object, and then, outputs a detection result to the moving object detection unit 132. Accordingly, when the another vehicle V is present near the vehicle 1, the moving object sensor 240 detects the distance to the another vehicle V, and outputs the detection result to the moving object detection unit 132. In addition, the moving object sensor 240 continuously detects the distance to the another vehicle V, so that, if the distance between the moving object sensor 240 and the another vehicle V is changed over time due to a movement of the another vehicle V, the moving object sensor 240 continuously outputs the distance to the another vehicle V that is changed over time to the moving object detection unit 132.

The moving object detection unit 132 that has received the detection result by the moving object sensor 240 detects that the moving object M that is moving relative to the vehicle 1 is present near the vehicle 1 that is parked based on a state in which the distance output from the moving object sensor 240 is changed over time. Furthermore, as the multiple moving object sensors 240 are arranged in the vehicle 1, the moving object detection unit 132 performs detection of the moving object M that is moving near the vehicle 1 by combining the changes of the distance, detected by the multiple moving object sensors 240, to the object that is located near the vehicle 1.

If it is determined that the moving object has been detected by the moving object detection unit 132 (determined Yes at Step S203), it is determined whether or not the moving object is another vehicle that is located nearby (Step S204). In detail, if the moving object has been detected by the moving object detection unit 132, a process of capturing an image is started in the imager 210, and the video data is acquired by the video data acquisition unit 120. At this time, the video data acquisition unit 120 acquires the video data captured by the multiple imagers included in the imager 210. The another vehicle detection unit 124 performs detection, based on the video data acquired by the video data acquisition unit 120, whether or not the moving object is the another vehicle that is present near the vehicle 1. That is, when the moving object detection unit 132 detects the moving object, the another vehicle detection unit 124 detects that the detected moving object is the another vehicle that is present near the vehicle 1 based on the multiple pieces of the video data acquired by the video data acquisition unit 120.

Detection of the another vehicle performed by the another vehicle detection unit 124 is performed by using, for example, the vehicle recognition dictionary. The vehicle recognition dictionary is stored in advance in an internal memory included in the control device 100 as a dictionary capable of checking that the moving object captured in the video data is a vehicle. As a result of detecting the moving object by the moving object detection unit 132, the another vehicle detection unit 124 performs detection of the another vehicle from the video data by checking the vehicle recognition dictionary against each of the multiple pieces of the video data captured by the imager 210.

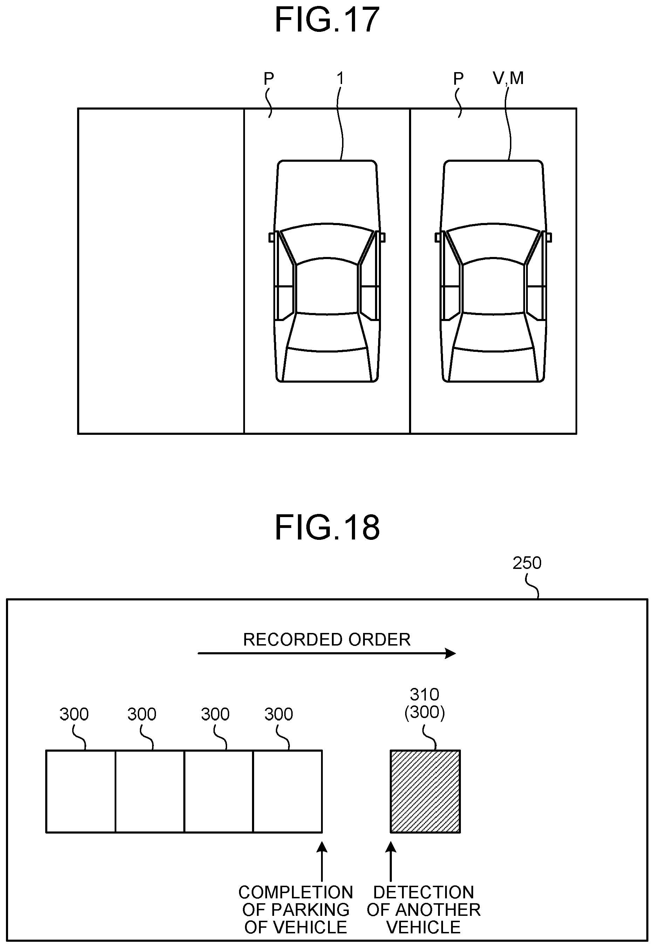

FIG. 17 is a diagram illustrating a state in which the another vehicle V has stopped at a location near the vehicle 1 that is parked. The another vehicle detection unit 124 performs detection of the another vehicle V from the multiple pieces of the video data acquired by the video data acquisition unit 120, and, for example, as illustrated in FIG. 17, the another vehicle detection unit 124 detects that the moving object M detected by the moving object detection unit 132 is the another vehicle V that has stopped at the location near the vehicle 1. That is, when the vehicle 1 is parked in the parking section P, the another vehicle is not parked in a parking section P (see FIG. 15) located next to the parking section P for the vehicle 1, and when the another vehicle V that is the moving object M has been parked after the vehicle 1 is parked and if the another vehicle V has stopped at the location near the vehicle 1, the another vehicle detection unit 124 detects the another vehicle V by the video data acquired by the video data acquisition unit 120. Furthermore, the same applies to a case in which the another vehicle has already been parked in the parking section P next to the parking section P for the vehicle 1, then the another vehicle exits the parking section P while the vehicle 1 is parked, and then, a next vehicle enters the parking section P.

The another vehicle detection unit 124 does not need to detect all of the another vehicles captured in the video of the video data, but may detect another vehicle that is present near the vehicle 1. It is preferable that the another vehicle detection unit 124 recognizes the another vehicle that occupies a predetermined area ratio or more, such as an area ratio of, for example, 20% or more, in the video captured by the imager 210, in particular, such as the another vehicle parked at a parking position adjacent to a parking position of the vehicle 1. Furthermore, in a case in which the detected another vehicle is stopped or almost stopped in the video, the another vehicle detection unit 124 determines that the detected another vehicle is stopped at that position.

If it is detected, by the another vehicle detection unit 124, that the moving object detected by the moving object detection unit 132 is the another vehicle that is present near the vehicle 1 and if it is determined that the moving object is the another vehicle (determined Yes at Step S204), the another vehicle video is temporarily stored (Step S205). FIG. 18 is a diagram illustrating the video data 300 when the another vehicle is detected. After it is detected, by the parking detection unit 123, that the vehicle 1 has been parked, if the another vehicle is detected by the another vehicle detection unit 124 from the video data 300 acquired by the video data acquisition unit 120, the recording controller 126 performs setting such that the video data 300 in which the another vehicle has been detected is treated as the another vehicle video data 310, and temporarily stores the video data. That is, when the moving object moving near the vehicle 1 that is parked is detected and it is detected by the another vehicle detection unit 124 that the moving object imaged in multiple pieces of the video data 300 acquired by the video data acquisition unit 120 is the another vehicle, the recording controller 126 temporarily stores the video data 300 in which the another vehicle has been detected in the recording unit 250 as the another vehicle video data 310. As a result, the recording controller 126 temporarily stores the video data 300 in which the another vehicle has been detected from among the pieces of video data 300 captured by the multiple imagers included in the imager 210. A process for temporarily storing the video data 300 includes a process of adding a flag indicating that the another vehicle has been detected to the video data 300 when the another vehicle has been detected, a process of storing the video data 300 in association with the event video data, and a process of prohibiting overwriting until the temporarily stored data is released.

Moreover, while the vehicle 1 is parked, after the video data in which the another vehicle has been detected is temporarily stored as the another vehicle video data in the recording unit 250, a capturing operation performed in the imager 210 may be continued, or may be stopped. FIG. 18 illustrates a conceptual diagram in a case in which an image capturing operation performed in the imager 210 is stopped after the another vehicle video data 310 has temporarily been stored.

Then, the control device 100 determines whether or not an event with respect to the vehicle 1 has been detected by the event detection unit 125 (Step S206). In detail, the event detection unit 125 detects an occurrence of an event based on whether or not an acceleration detected by the acceleration sensor 230 is equal to or larger than the threshold that is set in advance. That is, if the acceleration detected by the acceleration sensor 230 is less than the threshold, the event detection unit 125 does not detect an event with respect to the vehicle 1. In contrast, if the acceleration detected by the acceleration sensor 230 is equal to or larger than the threshold, the event detection unit 125 detects that a large impact shock has occurred with respect to the vehicle 1 and an event has occurred with respect to the vehicle 1.

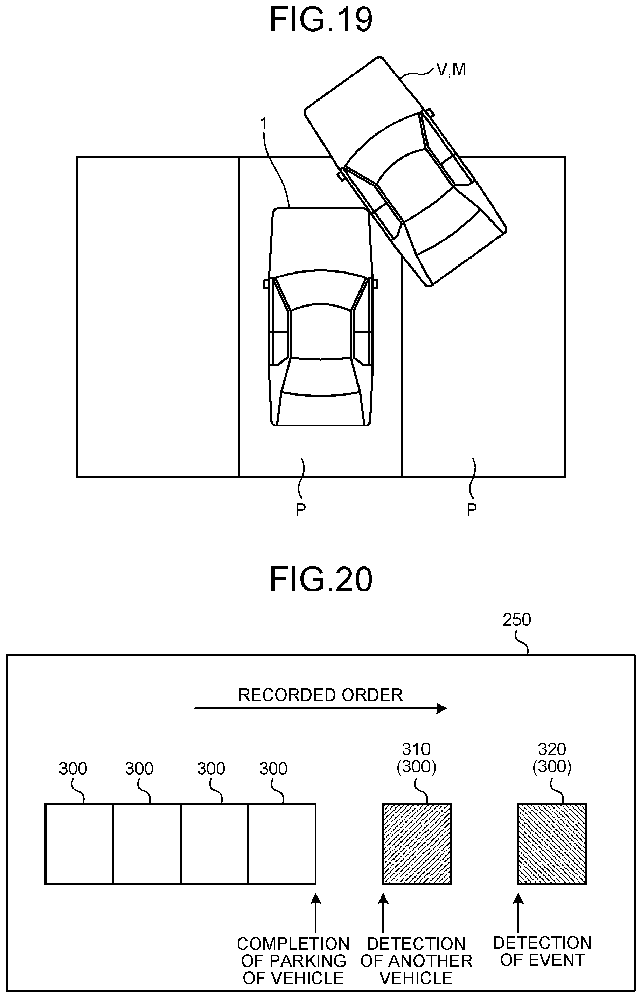

FIG. 19 is a diagram illustrating a state in which the another vehicle V comes into contact with the vehicle 1. The vehicle 1 that is parked does not move by itself. Therefore, an event with respect to the vehicle 1 occurring while the vehicle 1 is parked may be a case in which, for example, as illustrated in FIG. 19, the another vehicle V comes into contact with the vehicle 1. An example of a conceivable case in which the another vehicle V comes into contact with the vehicle 1 includes a case in which, for example, the another vehicle V which was parked in the parking section P located adjacent to the parking section P in which the vehicle 1 is parked as illustrated in FIG. 17 comes into contact with the vehicle 1 when the another vehicle V exits the parking section P as illustrated in FIG. 19. Furthermore, another conceivable case may be a case in which, for example, as illustrated in FIG. 19, the another vehicle V comes into contact with the vehicle 1 when the another vehicle V enters the parking section P.

If the event detection unit 125 detects that an event has occurred with respect to the vehicle 1 (determined Yes at Step S206), the recording controller 126 stores, in an associated manner, the video for a predetermined period of time due to the event and the another vehicle video that has been temporarily stored (Step S207). FIG. 20 is a diagram illustrating the video data 300 obtained when the event has been detected while the vehicle 1 is parked. If the occurrence of the event has been detected by the event detection unit 125, the on-vehicle recording device 10 according to the fifth embodiment starts to capture video by the imager 210 and acquires the video data 300 by the video data acquisition unit 120. That is, as the on-vehicle recording device 10 stops capturing the video by the imager 210 after having temporarily stored the another vehicle video data 310, when the occurrence of the event has been detected by the event detection unit 125 while the image capturing process by the imager 210 is stopped, the on-vehicle recording device 10 again starts the image capturing process by the imager 210 and acquires the video data 300 by the video data acquisition unit 120. Consequently, it is possible to record the video data 300 acquired immediately after detection of the event that has occurred while the vehicle 1 is parked.

Moreover, the recording controller 126 sets and stores, as the event video data 320, the video data 300 for a predetermined period of time after the occurrence of the event from among the pieces of video data 300 captured immediately after the event has been detected in this way. The predetermined period of time used in this case is a period of time assumed as a period of time required to verify the cause of the event that has occurred in the vehicle 1, and is set to, for example, 60 seconds, or the like from detection of the event.

Furthermore, if the event detection unit 125 detects the event while the vehicle 1 is parked, the recording controller 126 stores, in an associated manner, the event video data 320 that is the video data due to the detected event and the another vehicle video data 310. Specifically, the recording controller 126 associates the event video data 320 with the another vehicle video data 310 such that the another vehicle video data 310 is able to be easily replayed when the event video data 320 is replayed.

FIG. 20 is a diagram conceptually illustrating, similarly to FIG. 18, the another vehicle video data 310 temporarily stored when the another vehicle has been detected and the event video data 320 stored when the event has been detected in a state in which the vehicle 1 is parked and recording of the video data 300 by loop recording is stopped. The recording controller 126 stores, in an associated manner, the event video data 320 and the another vehicle video data 310.

After the process at Step S207 has been completed, the parking detection unit 123 determines whether or not the parking of the vehicle 1 has been ended (Step S208). That is, the control device 100 determines, by the parking detection unit 123, whether or not the parking of the vehicle 1 on which the on-vehicle recording device 10 is mounted has been ended. The parking detection unit 123 determines that the parking has been ended based on a state in which a power of an engine or the like of the vehicle 1 is turned off and an electric power is not supplied to the on-vehicle recording device 10. Furthermore, the parking detection unit 123 may determine whether or not the parking of the vehicle 1 has been ended by acquiring the vehicle information from the CAN interface 220 and determining whether the shift position is operated to a position other than "parking", a braking state made by a parking brake is released, or a vehicle speed becomes larger than 0 km/h.

As a result of the determination performed by the parking detection unit 123, if it is determined that the parking of the vehicle 1 has been ended (determined Yes at Step S208), the control device 100 ends the processes illustrated in FIG. 14. In this case, the another vehicle video data that has been temporarily stored at Step S205 is able to be deleted or overwritten by releasing the temporary stored state. Furthermore, regarding the another vehicle video data temporarily stored at Step S205, if an event is not detected (determined No at Step S206), and if a moving object is again detected (determined Yes at Step S203) in a state in which the parking is not ended (determined No at Step S208), the temporary stored state of the previous another vehicle video data is released, and new another vehicle video data is temporarily stored.

Moreover, as a result of the determination performed by the parking detection unit 123, if it is determined that parking of the vehicle 1 is not ended (determined No at Step S208), the process returns to Step S203 and it is determined whether or not the moving object has been detected.

Moreover, at the determination at Step S206, if the event detection unit 125 does not detect an occurrence of an event with respect to the vehicle 1 (determined No at Step S206), the process proceeds to Step S208, and it is determined whether or not the parking of the vehicle 1 has been ended (Step S208).

Moreover, at the determination performed at Step S203, if it is determined that the moving object is not detected (determined No at Step S203), or at the determination performed at Step S204, if it is determined that the detected moving object is not the another vehicle located near the vehicle 1 (determined No at Step S204), it is determined whether or not an event with respect to the vehicle 1 has been detected by the event detection unit 125 (Step S209). That is, the occurrence of the event is detected by the event detection unit 125 based on the detection result of the acceleration by the acceleration sensor 230, and based on whether or not the acceleration is equal to or larger than the threshold that is set in advance.

If the event detection unit 125 detects the occurrence of the event with respect to the vehicle 1 (determined Yes at Step S209), the recording controller 126 stores the video for a predetermined period of time due to the event (Step S210).

After the event video data has been stored at Step S210, the parking detection unit 123 determines whether or not the parking of the vehicle 1 has been ended (Step S211). That is, the control device 100 determines, similarly to the process performed at Step S208, whether or not the parking of the vehicle 1 on which the on-vehicle recording device 10 is mounted has been ended.

If it is determined, at the determination by the parking detection unit 123, that parking of the vehicle 1 has been ended (determined Yes at Step S211), the control device 100 ends the processes illustrated in FIG. 14. Furthermore, if it is determined, at the determination parking detection unit 123, that parking of the vehicle 1 is not ended (determined No at Step S211), the process returns to Step S203, and it is determined whether or not a moving object has been detected.

Moreover, at the determination at Step S209, if the event detection unit 125 does not detect the occurrence of the event with respect to the vehicle 1 (determined No at Step S209), the process proceeds to Step S211, and it is determined whether or not the parking has been ended (Step S211).

### Effects

As described above, in the fifth embodiment, in a case in which a moving object moving near the vehicle 1 that is parked has been detected by the moving object detection unit 132, if it is detected, by the another vehicle detection unit 124, that the detected moving object is the another vehicle that is moving near the vehicle 1 based on the video data, the another vehicle video data in which the another vehicle has been detected is temporarily stored. Furthermore, after the another vehicle video data has been temporarily stored, if the event detection unit 125 detects an event while the vehicle 1 is parked, the event video data due to the detected event is stored in associated with the another vehicle video data. As a result, even if an event occurs in the vehicle 1 that is parked, it is possible to appropriately record a video in which the another vehicle corresponding to the source of the occurrence of the event is able to be identified by referring to the event video data and the another vehicle video data. For example, if an event occurs due to the another vehicle coming into contact with the vehicle 1 that is parked, and the another vehicle continues running without stopping to cause a hit-and-run accident, it is possible to appropriately identify the another vehicle that causes the hit-and-run accident by referring to the another vehicle video data in which the another vehicle has been detected.

Moreover, the video data acquisition unit 120 acquires the video data captured by the multiple imagers included in the imager 210, and the recording controller 126 temporarily stores the another vehicle video data in which the another vehicle has been detected from among the video data captured by the multiple imagers included in the imager 210, so that it is possible to detect the another vehicle more reliably. That is, in a case in which a moving object moving near the vehicle 1 has been detected, it is possible to image the moving object over a wide range of surroundings of the vehicle 1, and it is possible to detect the another vehicle over a wide range of surroundings of the vehicle 1. As a result, it is possible to detect the another vehicle approaching the vehicle 1 more reliably while the vehicle 1 is parked, and, when an event has occurred, it is more appropriately identify the another vehicle corresponding to the source of the occurrence of the event.

Moreover, as the another vehicle detection unit 124 detects that the moving object detected by the moving object detection unit 132 is the another vehicle that has stopped at the location near the vehicle 1, the another vehicle detection unit 124 is able to detect the another vehicle that is parked near the vehicle 1 after the vehicle 1 has been parked. Accordingly, another vehicle that is likely to come into contact with the vehicle 1 and that is likely to be a cause of the occurrence of the event can be detected more reliably.

### Sixth Embodiment

A configuration of the on-vehicle recording device 10 according to a sixth embodiment is the same as that of the on-vehicle recording device 10 according to the fifth embodiment. However, the on-vehicle recording device 10 according to the sixth embodiment is different from the on-vehicle recording device 10 according to the fifth embodiment in that the on-vehicle recording device 10 according to the sixth embodiment performs detection of a license plate of the another vehicle. Other components and processes are the same as those described in the fifth embodiment; therefore, descriptions thereof will be omitted and the same reference numerals are assigned.

In the on-vehicle recording device 10 according to the sixth embodiment, the license plate provided on the another vehicle is detected when it is detected that a moving object moving near the vehicle 1 during the parking of the vehicle 1 is the another vehicle that is present near the vehicle 1. That is, in the sixth embodiment, the another vehicle detection unit 124 detects the another vehicle and the license plate of the another vehicle from the video data acquired by the video data acquisition unit 120.

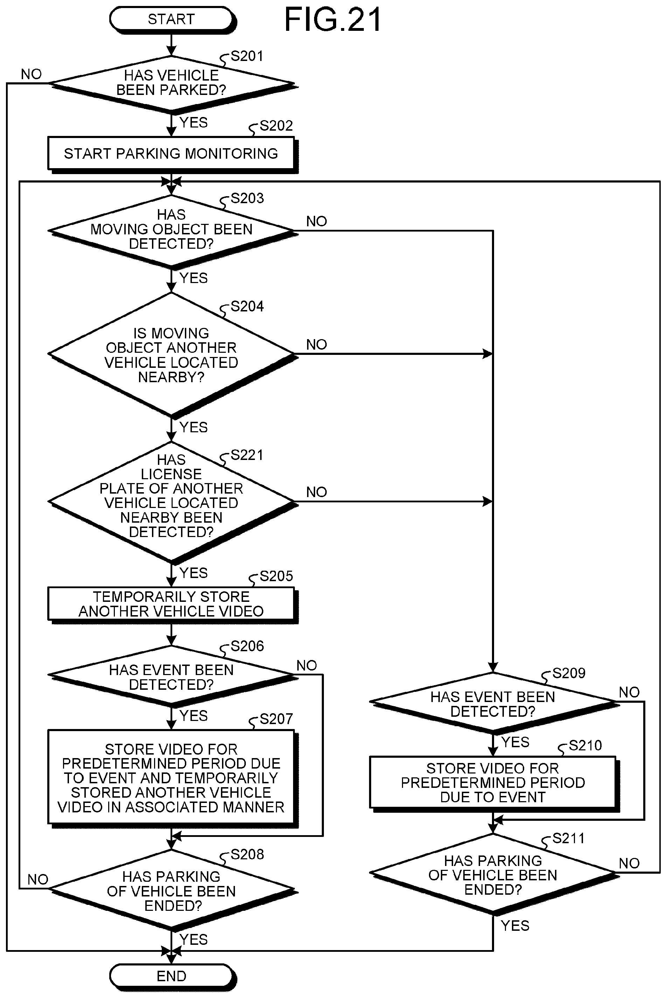

FIG. 21 is a flowchart illustrating a flow of processes in the on-vehicle recording control device 100 according to the sixth embodiment.

At Step S204, if it is detected, by the another vehicle detection unit 124, that the moving object detected by the moving object detection unit 132 is the another vehicle that is present near the vehicle 1, and if it is determined that the moving object is the another vehicle (determined Yes at Step S204), it is determined whether or not a license plate of the another vehicle located nearby has been detected (Step S221). That is, the another vehicle detection unit 124 that performs detection of the another vehicle based on the video data acquired by the video data acquisition unit 120 detects the another vehicle from the video data acquired by the video data acquisition unit 120, and, furthermore, performs detection of the license plate attached to the another vehicle. That is, the another vehicle detection unit 124 further detects whether or not the license plate is included in the video data in which the another vehicle has been detected.

If the license plate of the another vehicle that is moving near the vehicle 1 has been detected by the another vehicle detection unit 124 (determined Yes at Step S221), the another vehicle video in which the license plate has been detected is temporarily stored (Step S205). That is, the recording controller 126 temporarily stores, as the another vehicle video data, the video data in which the license plate of the another vehicle has been detected together with the another vehicle from among the pieces of the video data acquired by the video data acquisition unit 120.

Then, the control device 100 determines whether or not an event with respect to the vehicle 1 has been detected by the event detection unit 125 (Step S206). As a result of this determination, if the event detection unit 125 detects an occurrence of an event with respect to the vehicle 1 (determined Yes at Step S206), the recording controller 126 stores, in an associated manner, the video for a predetermined period of time due to the event and the another vehicle video that is temporarily stored at Step S205 (Step S207).

Moreover, if it is determined, at the determination performed at Step S203, that the moving object M is not detected (determined No at Step S203), or, if it is determined, at the determination performed at Step S204, that it is detected that the detected moving object M is not the another vehicle V that is located near the vehicle 1 (determined No at Step S204), or, at the determination performed at Step S221, if the license plate of the another vehicle V that is moving near the vehicle 1 is not detected by the another vehicle detection unit 124 (determined No at Step S221), it is determined whether or not an event with respect to the vehicle 1 has been detected by the event detection unit 125 (Step S209). That is, when it is possible to detect that the moving object M is the another vehicle that is present near the vehicle 1 based on the video data 300 acquired by the video data acquisition unit 120 and the license plate of the another vehicle is not able to be detected (determined No at Step S221), the process proceeds to Step S209, and it is determined whether or not an event with respect to the vehicle 1 has been detected.

### Effects

As described above, in the sixth embodiment, the another vehicle detection unit 124 detects the license plate of the another vehicle from the video data acquired by the video data acquisition unit 120, in addition to detecting that the moving object is the another vehicle, and temporarily stores, as the another vehicle video data, the video data in which the license plate has been detected. Accordingly, the another vehicle that is moving near the vehicle 1 during the parking of the vehicle 1 is identified more reliably based on the information indicated on the license plate. Accordingly, even if an event has occurred in the vehicle 1 that is parked, it is possible to identify the cause of the event more reliably by referring to the event video data and the another vehicle video data in which the license plate has been detected. That is, the another vehicle that comes into contact with the vehicle 1 is identified more reliably during the parking of the vehicle 1 based on the information indicated on the license plate in the another vehicle video data. As a result, it is possible to more appropriately record the video in which the another vehicle related to the event that has occurred while the vehicle 1 is parked is able to be identified.

### Seventh Embodiment

A configuration of the on-vehicle recording device 10 according to a seventh embodiment is the same as that of the on-vehicle recording device 10 according to the first embodiment, and has a feature in that a replay method of the stored video data is specified. Other components are the same as those described in the first embodiment. Therefore, descriptions thereof will be omitted and the same reference numerals are assigned.

In the on-vehicle recording device 10 according to the seventh embodiment, as described as above in the first embodiment to the sixth embodiment, the video data in which the another vehicle video data and the event video data are stored in an associated manner is replayed. The replay of the video data is performed by an input operation of a replay instruction being performed on the operation unit 260.

Furthermore, the replay of the video data stored in the recording unit 250 may be performed by, for example, another device, such as a personal computer (PC), in addition to the replay by the on-vehicle recording device 10.

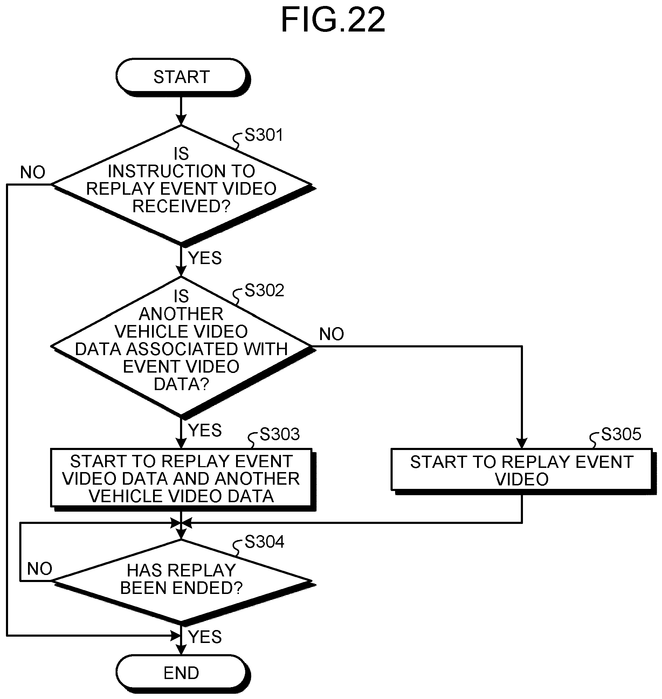

In the following, a flow of processes when the event video data is replayed will be described with reference to FIG. 22. FIG. 22 is a flowchart illustrating a flow of processes in the on-vehicle recording control device 100 according to the seventh embodiment. In the process procedure for replaying the event video data, the replay controller 127 determines whether or not a replay instruction to replay the event video data has been received from the operation controller 128 (Step S301).

If it is determined that the replay instruction for the event video data is not received (determined No at Step S301), the control device 100 ends the processes for replaying the event video data. If it is determined that the replay instruction for the event video data is received (determined Yes at Step S301), the replay controller 127 determines whether or not the another vehicle video data is associated with the event video data that is instructed to be replayed (Step S302).

If it is determined, at the determination by the replay controller 127, that the another vehicle video data is associated with the event video data that is instructed to be replayed (determined Yes at Step S302), a replay of both of the event video data and the another vehicle video data is started (Step S303).

The replay of both of the event video data and the another vehicle video data started at Step S303 is performed by, for example, simultaneously replaying both of the event video data and the another vehicle video data on the same screen or continuously replaying both of the event video data and the another vehicle video data. Alternatively, a replay of the another vehicle video data is possible to urge to replay the another vehicle video data by indicating presence of the another vehicle video data when the event video data is replayed.

Then, it is determined, by the replay controller 127, whether or not the replay of the event video data and the another vehicle video data has been ended (Step S304), and when it is determined that the replay is not ended (determined No at Step S304), the replay is continued until the replay has been ended. The end of the replay includes an end operation of the replay by a user, in addition to the end of the replay of the event video data and the another vehicle video data.

If it is determined that the replay of the event video data and the another vehicle video data has been ended (determined Yes at Step S304), the control device 100 ends the processes for replaying the event video data.

If it is determined, at the determination performed at Step S302, that the another vehicle video data is not associated with the event video data that is instructed to be replayed (determined No at Step S302), the replay of the event video data is started (Step S305).

After the replay of the event video data is started, the replay controller 127 determines whether or not the replay of the event video data that is started to be replayed has been ended (Step S304), and when it is determined that the replay is not ended (determined No at Step S304), the replay controller 127 continues the replay of the event video data until the replay has been ended. If the replay of the event video data has been ended (determined Yes at Step S304), the replay controller 127 ends the processes for replaying the event video data.

### Effects

As described above, in the seventh embodiment, in a case in which an instruction to replay the event video data that is the video data when the occurrence of the event has been detected while the vehicle 1 is parked is given, if the another vehicle video data is associated with the event video data, the another vehicle video data is also replayed in addition to the event video data, so that it is more appropriately identify the another vehicle related to the event. As a result, it is possible to increase usability of the on-vehicle recording device 10 during the parking of the vehicle 1.

In the above, the on-vehicle recording device 10 according to the present invention has been described. However, an embodiment may also be implemented with various kinds of embodiments other than the first embodiment to the seventh embodiment described above.

Each of the components included in the on-vehicle recording device 10 illustrated in the drawings are only for conceptually illustrating the functions thereof and are not always physically configured as illustrated in the drawings. That is, the specific configuration of the device is not limited to the drawings. Specifically, all or part of the device can be configured by functionally or physically separating or integrating any of the units depending on various loads or use conditions.

The configuration of the on-vehicle recording device 10 is implemented as, for example, software, programs, or the like loaded in a memory. In the embodiments described above, the description has been given as the functional blocks that are implemented in cooperation with these pieces of hardware or software. That is, the functional blocks can be implemented in various forms by using only hardware, using only software, or using a combination of hardware and software.

The components described above include one that can easily be thought of by a person skilled in the art and one that is practically identical. Further, the configurations described above may be combined appropriately. Furthermore, various omissions, replacements, and modifications of the components may be made within the scope of the present invention as defined by the appended claims.

### Industrial Applicability

The on-vehicle recording control device and the on-vehicle recording control method according to the present embodiment may be used for, for example, a dashboard camera.

## Claims

1. An on-vehicle recording control device (10) comprising:
a video data acquisition unit (120) configured to acquire video data captured by imagers (210) that capture images of surroundings of a vehicle (1);
a parking detection unit (123) configured to detect that the vehicle (1) has been parked;
an another vehicle detection unit (124) configured to detect another vehicle (V) from the video data acquired by the video data acquisition unit (120);
an event detection unit (125) configured to detect an event with respect to the vehicle (1); and
a recording controller (126) configured to store the video data acquired by the video data acquisition unit (120), **characterized in that**
the recording controller (126) is further configured to temporarily store, when the another vehicle detection unit (124) detects another vehicle, after the parking detection unit (123) has detected that the vehicle (1) has been parked, the video data in which the another vehicle (V) has been detected by the another vehicle detection unit (124), and
to store, when the event detection unit (125) detects, after temporarily storing the video data, the event while the vehicle (1) is parked, the video data due to the detected event and the temporarily stored video data in which the another vehicle (V) has been detected in an associated manner.

2. The on-vehicle recording control device (10) according to claim 1, wherein the another vehicle detection unit (124) is further configured to detect, when the parking detection unit (123) detects that the vehicle (1) has been parked, the another vehicle (V) from the video data for a predetermined period of time prior to a time at which the vehicle (1) has been parked.

3. The on-vehicle recording control device (10) according to claim 2, wherein
the video data acquisition unit (120) is further configured to acquire the video data captured by the imagers (210 that capture images in different image capturing directions,
the parking detection unit (123) is further configured to detect a vehicle entering direction into a parking section (P) during parking of the vehicle (1), and
the recording controller (126) is further configured to temporarily store the video data in which the another vehicle (V) has been detected by the another vehicle detection unit (124) from the video data captured by an imager that is included in the imagers (210) and that captures the image in the vehicle entering direction detected by the parking detection unit (123).

4. The on-vehicle recording control device (10) according to claim 2, wherein
the imagers (210) includes
first imagers (211) that capture front and rear sides of the vehicle (1), and
second imagers (216) that are provided on left and right sides of the vehicle (1),
the video data acquisition unit (120) is further configured to acquire the video data captured by the first imager (211) and the video data captured by the second imager (216), and
the another vehicle detection unit (124) is further configured to detect the another vehicle (V) from the video data captured by the second imager (216) and acquired by the video data acquisition unit (120).

5. The on-vehicle recording control device (10) according to claim 2 or 3, wherein
the another vehicle detection unit (124) is further configured to detect the another vehicle (V) and a license plate of the another vehicle (V) from the video data acquired by the video data acquisition unit (120), and
the recording controller (126) is further configured
to temporarily store the video data in which the another vehicle (V) and the license plate of the another vehicle (V) have been detected by the another vehicle detection unit (124), and
to store, in an associated manner, the video data due to the detected event and the video data in which the another vehicle (V) and the license plate of the another vehicle (V) have been detected.

6. The on-vehicle recording control device (10) according to claim 1, further comprising:
a moving object detection unit (132) configured to detect a moving object that is moving near the vehicle (1) while the vehicle (1) is parked, wherein
when the moving object detection unit (132) detects the moving object, the another vehicle detection unit (124) is further configured to detect, from the video data detected by the video data acquisition unit (120), that the detected moving object is the another vehicle (V) that is present near the vehicle (1).

7. The on-vehicle recording control device (10) according to claim 6, wherein
the video data acquisition unit (120) is further configured to acquire the video data captured by the imagers (210) that capture images in different image capturing directions,
and
the recording controller (126) is further configured to temporarily store at least the video data in which the another vehicle (V) has been detected among from pieces of the video data captured by the imagers (210).

8. The on-vehicle recording control device (10) according to claim 6 or 7, wherein
the another vehicle detection unit (124) is further configured to detect the another vehicle (V) and a license plate of the another vehicle (V) from the video data acquired by the video data acquisition unit (120), and
the recording controller (126) is further configured
to temporarily store the video data in which the another vehicle (V) and the license plate of the another vehicle (V) have been detected by the another vehicle detection unit (124), and
to store, in an associated manner, the video data due to the detected event and the video data in which the another vehicle (V) and the license plate of the another vehicle (V) have been detected.

9. The on-vehicle recording control device (10) according to any one of claims 6 to 8, wherein the another vehicle detection unit (124) is further configured to detect that the moving object detected by the moving object detection unit (132) is the another vehicle (V) that has stopped at a location near the vehicle (1).

10. An on-vehicle recording control method performed by an on-vehicle recording control device (10) comprising:
a video data acquiring step of acquiring video data captured by imagers (210) that capture images of surroundings of a vehicle;
a parking detecting step of detecting that the vehicle (1) has been parked;
another vehicle detecting step of detecting another vehicle (V) from the video data acquired at the video data acquisition step;
an event detecting step of detecting an event with respect to the vehicle (1); **characterized in that** the method further comprising:
a recording controlling step of
temporarily storing, after it is detected at the parking detecting step that the vehicle (1) has been parked, the video data in which the another vehicle (V) has been detected at the another vehicle detecting step, and
storing, when the event is detected at the event detecting step, after the step of temporarily storing the video data, while the vehicle (1) is parked, the video data due to the detected event and the temporarily stored video data in which the another vehicle (V) has been detected in an associated manner.

## Patentansprüche

1. Fahrzeugeigene Aufzeichnungssteuervorrichtung (10) mit:
einer Videodatenerfassungseinheit (120), die konfiguriert ist zum Erfassen von Videodaten erfasst, die von Bildaufnahmeeinheiten (210) aufgenommen wurden, die Bilder der Umgebung eines Fahrzeugs (1) aufnehmen;
einer Park-Detektionseinheit (123), die konfiguriert ist zum Detektieren, dass das Fahrzeug (1) geparkt wurde;
eine Detektionseinheit (124) für ein anderes Fahrzeug, die konfiguriert ist zum Detektieren eines anderen Fahrzeugs (V) aus den von der Videodatenerfassungseinheit (120) erfassten Videodaten;
eine Ereignis-Detektionseinheit (125), die konfiguriert ist zum Detektieren eines Ereignisses in Bezug auf das Fahrzeug (1); und
eine Aufzeichnungssteuerung (126), die konfiguriert ist zum Speichern der von der Videodatenerfassungseinheit (120) erfassten Videodaten, **dadurch gekennzeichnet, dass**
die Aufzeichnungssteuerung (126) ferner konfiguriert ist,
wenn die Detektionseinheit (124) für ein anderes Fahrzeug ein anderes Fahrzeug detektiert, nachdem die Park-Detektionseinheit (123) detektiert hat, dass das Fahrzeug (1) geparkt wurde, zum vorübergehenden Speichern der Videodaten, in denen das andere Fahrzeug (V) von der Detektionseinheit (124) für ein anderes Fahrzeug detektiert wurde, und
wenn die Ereignis-Detektionseinheit (125) nach dem vorübergehenden Speichern der Videodaten das Ereignis detektiert, während das Fahrzeug (1) geparkt ist, zum Speichern der Videodaten infolge des detektierten Ereignisses und der vorübergehend gespeicherten Videodaten, in denen das andere Fahrzeug (V) detektiert wurde, in einer assoziierten Weise.

2. Fahrzeugeigene Aufzeichnungssteuervorrichtung (10) gemäß Anspruch 1, wobei die Detektionseinheit (124) für ein anderes Fahrzeug ferner konfiguriert ist zum Detektieren, wenn die Park-Detektionseinheit (123) detektiert, dass das Fahrzeug (1) geparkt wurde, des anderen Fahrzeugs (V) aus den Videodaten für einen vorbestimmten Zeitraum vor einem Zeitpunkt, zu dem das Fahrzeug (1) geparkt wurde.

3. Fahrzeugeigene Aufzeichnungssteuervorrichtung (10) gemäß Anspruch 2, wobei
die Videodatenerfassungseinheit (120) ferner konfiguriert ist zum Erfassen der von den Bildaufnahmeeinheiten (210) aufgenommenen Videodaten, die Bilder in unterschiedlichen Bildaufnahmerichtungen aufnehmen,
die Park-Detektionseinheit (123) ferner konfiguriert ist zum Detektieren einer Einfahrtsrichtung eines Fahrzeugs in einen Parkabschnitt (P) während des Parkens des Fahrzeugs (1), und
die Aufzeichnungssteuerung (126) ferner konfiguriert ist zum vorübergehenden Speichern der Videodaten, in denen das andere Fahrzeug (V) von der Detektionseinheit (124) für ein anderes Fahrzeug detektiert wurde, und zwar aus den Videodaten, die von einer Bildaufnahmeeinheit aufgenommen wurden, die in den Bildaufnahmeeinheiten (210) enthalten ist und die das Bild in der von der Park-Detektionseinheit (123) detektierten Einfahrtsrichtung des Fahrzeugs aufnimmt.

4. Fahrzeugeigene Aufzeichnungssteuervorrichtung (10) gemäß Anspruch 2, wobei
die Bildaufnahmeeinheiten (210) Folgendes aufweisen:
erste Bildaufnahmeeinheiten (211), die die Vorderund Rückseite des Fahrzeugs (1) aufnehmen, und
zweite Bildaufnahmeeinheiten (216), die an der linken und rechten Seite des Fahrzeugs (1) vorgesehen sind,
die Videodatenerfassungseinheit (120) ferner konfiguriert ist zum Erfassen der von der ersten Bildaufnahmeeinheit (211) aufgenommenen Videodaten und der von der zweiten Bildaufnahmeeinheit (216) aufgenommenen Videodaten, und
die Detektionseinheit (124) für ein anderes Fahrzeug ferner konfiguriert ist zum Detektieren des anderen Fahrzeugs (V) aus den von der zweiten Bildaufnahmeeinheit (216) aufgenommenen und von der Videodatenerfassungseinheit (120) erfassten Videodaten.

5. Fahrzeugeigene Aufzeichnungssteuervorrichtung (10) gemäß Anspruch 2 oder 3, wobei
die Detektionseinheit (124) für ein anderes Fahrzeug ferner konfiguriert ist zum Detektieren des anderen Fahrzeugs (V) und eines Kennzeichens des anderen Fahrzeugs (V) aus den von der Videodatenerfassungseinheit (120) erfassten Videodaten, und
die Aufzeichnungssteuerung (126) ferner konfiguriert ist zum
vorübergehenden Speichern der Videodaten, in denen das andere Fahrzeug (V) und das Kennzeichen des anderen Fahrzeugs (V) von der Detektionseinheit (124) für ein anderes Fahrzeug detektiert wurden, und
Speichern, in einer assoziierten Weise, der Videodaten infolge des detektierten Ereignisses und der Videodaten, in denen das andere Fahrzeug (V) und das Kennzeichen des anderen Fahrzeugs (V) detektiert wurden.

6. Fahrzeugeigene Aufzeichnungssteuervorrichtung (10) gemäß Anspruch 1, die ferner Folgendes aufweist:
eine Bewegungsobjekt-Detektionseinheit (132), die konfiguriert ist zum Detektieren eines sich bewegenden Objekts, das sich in der Nähe des Fahrzeugs (1) bewegt, während das Fahrzeug (1) geparkt ist, wobei
wenn die Bewegungsobjekt-Detektionseinheit (132) das sich bewegende Objekt detektiert, die Detektionseinheit (124) für ein anderes Fahrzeug ferner konfiguriert ist zum Detektieren, aus den von der Videodatenerfassungseinheit (120) erfassten Videodaten, dass das detektierte, sich bewegende Objekt das andere Fahrzeug (V) ist, das sich in der Nähe des Fahrzeugs (1) befindet.

7. Fahrzeugeigene Aufzeichnungssteuervorrichtung (10) gemäß Anspruch 6, wobei
die Videodatenerfassungseinheit (120) ferner konfiguriert zum Erfassen der Videodaten, die von den Bildaufnahmeeinheiten (210) aufgenommen wurden, die Bilder in verschiedenen Bildaufnahmerichtungen aufnehmen,
und
die Aufzeichnungssteuerung (126) ferner konfiguriert ist zum vorübergehenden Speichern zumindest der Videodaten, in denen das andere Fahrzeug (V) detektiert wurde, aus Teilen der von den Bildaufnahmeeinheiten (210) erfassten Videodaten.

8. Fahrzeugeigene Aufzeichnungssteuervorrichtung (10) gemäß Anspruch 6 oder 7, wobei
die Detektionseinheit (124) für ein anderes Fahrzeug ferner konfiguriert ist zum Detektieren des anderen Fahrzeugs (V) und eines Kennzeichens des anderen Fahrzeugs (V) aus den von der Videodatenerfassungseinheit (120) erfassten Videodaten, und
die Aufzeichnungssteuerung (126) ferner konfiguriert ist zum
vorübergehenden Speichern der Videodaten, in denen das andere Fahrzeug (V) und das Kennzeichen des anderen Fahrzeugs (V) von der Detektionseinheit (124) für andere Fahrzeuge detektiert wurden, und
zum Speichern, in einer assoziierten Weise, der Videodaten infolge des detektierten Ereignisses und der Videodaten, in denen das andere Fahrzeug (V) und das Kennzeichen des anderen Fahrzeugs (V) detektiert wurden.

9. Fahrzeugeigene Aufzeichnungssteuervorrichtung (10) gemäß einem der Ansprüche 6 bis 8, wobei die Detektionseinheit (124) für ein anderes Fahrzeug ferner konfiguriert ist zum Detektieren, dass das von der Bewegungsobjekt-Detektionseinheit (132) detektierte, sich bewegende Objekt das andere Fahrzeug (V) ist, das an einer Stelle in der Nähe des Fahrzeugs (1) angehalten hat.

10. Fahrzeugeigenes Aufzeichnungssteuerungsverfahren, das von einer fahrzeugeigenen Aufzeichnungssteuervorrichtung (10) durchgeführt wird, aufweisend:
einen Videodatenerfassungsschritt zum Erfassen von Videodaten, die von Bildaufnahmeeinheiten (210) aufgenommen werden, die Bilder der Umgebung eines Fahrzeugs aufnehmen;
einen Park-Detektionsschritt zum Detektieren, dass das Fahrzeug (1) geparkt wurde;
einen Schritt zum Detektieren eines anderen Fahrzeugs, bei dem ein anderes Fahrzeug (V) aus den Videodaten, die im Schritt zum Erfassen von Videodaten erfasst wurden, detektiert wird;
einen Schritt zum Detektieren eines Ereignisses, bei dem ein Ereignis in Bezug auf das Fahrzeug (1) detektiert wird;
**dadurch gekennzeichnet, dass** das Verfahren ferner Folgendes aufweist:
einen Aufzeichnungssteuerschritt, zum
nachdem im Park-Detektionsschritt detektiert wurde, dass das Fahrzeug (1) geparkt wurde, vorübergehenden Speichern der Videodaten, in denen das andere Fahrzeug (V) im Schritt zum Detektieren eines anderen Fahrzeugs detektiert wurde, werden, und
Speichern, wenn das Ereignis im Schritt zum Detektieren eines Ereignisses, nach dem Schritt des vorübergehenden Speicherns der Videodaten, während das Fahrzeug (1) geparkt ist, detektiert wird, der Videodaten infolge des detektierten Ereignisses und der vorübergehend gespeicherten Videodaten, in denen das andere Fahrzeug (V) detektiert wurde, in einer assoziierten Weise.

## Revendications

1. Dispositif de contrôle d'enregistrement embarqué (10) comprenant :
une unité d'acquisition de données vidéo (120) configurée pour acquérir des données vidéo capturées par des imageurs (210) qui capturent des images de l'environnement d'un véhicule (1) ;
une unité de détection de stationnement (123) configurée pour détecter que le véhicule (1) a été stationné ;
une unité de détection d'un autre véhicule (124) configurée pour détecter un autre véhicule (V) à partir des données vidéo acquises par l'unité d'acquisition de données vidéo (120) ;
une unité de détection d'événement (125) configurée pour détecter un événement concernant le véhicule (1) ; et
un contrôleur d'enregistrement (126) configuré pour stocker les données vidéo acquises par l'unité d'acquisition de données vidéo (120), **caractérisé en ce que**
le contrôleur d'enregistrement (126) est en outre configuré pour stocker temporairement, lorsque l'unité de détection d'un autre véhicule (124) détecte un autre véhicule, après que l'unité de détection de stationnement (123) a détecté que le véhicule (1) a été garé, les données vidéo dans lesquelles l'autre véhicule (V) a été détecté par l'unité de détection d'un autre véhicule (124), et
pour stocker, lorsque l'unité de détection d'événement (125) détecte, après le stockage temporaire des données vidéo, l'événement alors que le véhicule (1) est stationné, les données vidéo dues à l'événement détecté et les données vidéo stockées temporairement dans lesquelles l'autre véhicule (V) a été détecté de façon associée.

2. Dispositif de contrôle d'enregistrement embarqué (10) selon la revendication **1,** dans lequel l'unité de détection d'un autre véhicule (124) est en outre configurée pour détecter, lorsque l'unité de détection de stationnement (123) détecte que le véhicule (1) a été stationné, l'autre véhicule (V) à partir des données vidéo pendant une période de temps prédéterminée avant un instant auquel le véhicule (1) a été stationné.

3. Dispositif de contrôle d'enregistrement embarqué (10) selon la revendication 2, dans lequel
l'unité d'acquisition de données vidéo (120) est en outre configurée pour acquérir les données vidéo capturées par les imageurs (210) qui capturent des images dans différentes directions de capture d'image,
l'unité de détection de stationnement (123) est en outre configurée pour détecter une direction d'entrée d'un véhicule dans une section de stationnement (P) pendant le stationnement du véhicule (1), et
le contrôleur d'enregistrement (126) est en outre configuré pour stocker temporairement les données vidéo dans lesquelles l'autre véhicule (V) a été détecté par l'unité de détection d'un autre véhicule (124) à partir des données vidéo capturées par un imageur qui est inclus dans les imageurs (210) et qui capture l'image dans la direction d'entrée d'un véhicule détectée par l'unité de détection de stationnement (123).

4. Dispositif de contrôle d'enregistrement embarqué (10) selon la revendication 2, dans lequel
les imageurs (210) comportent
des premiers imageurs (211) qui capturent les côtés avant et arrière du véhicule (1), et
des deuxièmes imageurs (216) qui sont prévus des côtés gauche et droit du véhicule (1),
l'unité d'acquisition de données vidéo (120) est en outre configurée pour acquérir les données vidéo capturées par le premier imageur (211) et les données vidéo capturées par le deuxième imageur (216), et
l'unité de détection d'un autre véhicule (124) est en outre configurée pour détecter l'autre véhicule (V) à partir des données vidéo capturées par le deuxième imageur (216) et acquises par l'unité d'acquisition de données vidéo (120).

5. Dispositif de contrôle d'enregistrement embarqué (10) selon la revendication 2 ou 3, dans lequel
l'unité de détection d'un autre véhicule (124) est en outre configurée pour détecter l'autre véhicule (V) et une plaque d'immatriculation de l'autre véhicule (V) à partir des données vidéo acquises par l'unité d'acquisition de données vidéo (120), et
le contrôleur d'enregistrement (126) est en outre configuré
pour stocker temporairement les données vidéo dans lesquelles l'autre véhicule (V) et la plaque d'immatriculation de l'autre véhicule (V) ont été détectés par l'unité de détection d'un autre véhicule (124), et
pour stocker, de façon associée, les données vidéo dues à l'événement détecté et les données vidéo dans lesquelles l'autre véhicule (V) et la plaque d'immatriculation de l'autre véhicule (V) ont été détectés.

6. Dispositif de contrôle d'enregistrement embarqué (10) selon la revendication 1, comprenant en outre :
une unité de détection d'objet en mouvement (132) configurée pour détecter un objet en mouvement qui se déplace à proximité du véhicule (1) pendant que le véhicule (1) est stationné, dans lequel
lorsque l'unité de détection d'objet en mouvement (132) détecte l'objet en mouvement, l'unité de détection d'un autre véhicule (124) est en outre configurée pour détecter, à partir des données vidéo détectées par l'unité d'acquisition de données vidéo (120), que l'objet en mouvement détecté est l'autre véhicule (V) qui est présent à proximité du véhicule (1).

7. Dispositif de contrôle d'enregistrement embarqué (10) selon la revendication 6, dans lequel
l'unité d'acquisition de données vidéo (120) est en outre configurée pour acquérir les données vidéo capturées par les imageurs (210) qui capturent des images dans différentes directions de capture d'image,
et
le contrôleur d'enregistrement (126) est en outre configuré pour stocker temporairement au moins les données vidéo dans lesquelles l'autre véhicule (V) a été détecté parmi des parties des données vidéo capturées par les imageurs (210).

8. Dispositif de contrôle d'enregistrement embarqué (10) selon la revendication 6 ou 7, dans lequel
l'unité de détection d'un autre véhicule (124) est en outre configurée pour détecter l'autre véhicule (V) et une plaque d'immatriculation de l'autre véhicule (V) à partir des données vidéo acquises par l'unité d'acquisition de données vidéo (120), et
le contrôleur d'enregistrement (126) est en outre configuré
pour stocker temporairement les données vidéo dans lesquelles l'autre véhicule (V) et la plaque d'immatriculation de l'autre véhicule (V) ont été détectés par l'unité de détection d'un autre véhicule (124), et
pour stocker, de façon associée, les données vidéo dues à l'événement détecté et les données vidéo dans lesquelles l'autre véhicule (V) et la plaque d'immatriculation de l'autre véhicule (V) ont été détectés.

9. Dispositif de contrôle d'enregistrement embarqué (10) selon l'une quelconque des revendications 6 à 8, dans lequel l'unité de détection d'un autre véhicule (124) est en outre configurée pour détecter que l'objet en mouvement détecté par l'unité de détection d'objet en mouvement (132) est l'autre véhicule (V) qui s'est arrêté à un emplacement proche du véhicule (1).

10. Procédé de contrôle d'enregistrement embarqué réalisé par un dispositif de contrôle d'enregistrement embarqué (10) comprenant :
une étape d'acquisition de données vidéo d'acquisition de données vidéo capturées par des imageurs (210) qui capturent des images de l'environnement d'un véhicule ;
une étape de détection de stationnement de détection que le véhicule (1) a été stationné ;
une autre étape de détection de véhicule de détection d'un autre véhicule (V) à partir des données vidéo acquises à l'étape d'acquisition de données vidéo ;
une étape de détection d'événement de détection d'un événement relatif au véhicule (1) ;
**caractérisé en ce que** le procédé comprend en outre :
une étape de contrôle d'enregistrement de
stockage temporaire, après qu'il a été détecté à l'étape de détection de stationnement que le véhicule (1) a été stationné, les données vidéo dans lesquelles l'autre véhicule (V) a été détecté à l'étape de détection d'un autre véhicule, et
stockage, lorsque l'événement est détecté à l'étape de détection d'événement, après l'étape de stockage temporaire des données vidéo, pendant que le véhicule (1) est stationné, des données vidéo dues à l'événement détecté et des données vidéo dans lesquelles l'autre véhicule (V) a été détecté de façon associée.
